(19) Europäisches Patentamt / European Patent Office / Office européen des brevets

(11) **EP 2 137 626 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **08736033.5**

(22) Anmeldetag: **09.04.2008**

(51) Int Cl.:
***G06F 13/16*** *(2006.01)*

(86) Internationale Anmeldenummer:
**PCT/EP2008/054310**

(87) Internationale Veröffentlichungsnummer:
**WO 2008/125575 (23.10.2008 Gazette 2008/43)**

(54) **VERFAHREN UND VORRICHTUNG ZUR ZUGRIFFSSTEUERUNG MEHRERER APPLIKATIONEN**

METHOD AND DEVICE FOR CONTROLLING ACCESS TO MULTIPLE APPLICATIONS

PROCÉDÉ ET DISPOSITIF POUR COMMANDER L'ACCÈS DE PLUSIEURS APPLICATIONS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.04.2007 EP 07106251**

(43) Veröffentlichungstag der Anmeldung:
**30.12.2009 Patentblatt 2009/53**

(73) Patentinhaber: **Tixel GmbH**
**30625 Hannover (DE)**

(72) Erfinder:
• **FUERST, Lars Eric**
**30177 Hannover (DE)**
• **EINHORN, Ralf**
**30171 Hannover (DE)**
• **HERPEL, Carsten**
**30974 Wennigsen (DE)**
• **KOEHLER, Ralf**
**30455 Hannover (DE)**

(56) Entgegenhaltungen:
**US-B2- 7 185 174**

**Beschreibung**

Die Erfindung betrifft ein Verfahren und eine Vorrichtung zur Zugriffssteuerung mehrerer Applikationen, die jeweils als ein Applikations-Client in einer Betriebssystemumgebung einer Datenverarbeitungseinrichtung implementiert sind, auf ein gemeinsames Speichersystem.

Stand der Technik

Derartige Verfahren und Vorrichtungen werden beispielsweise bei der digitalen Nachbearbeitung von Kinofilmen verwendet, die innerhalb der professionellen Filmproduktion immer mehr an Bedeutung gewinnt. Die Ansprüche an aktuelle Produktionen in Bezug auf computergenerierte Effekte und hochauflösende Bilder steigen stetig. Mittlerweile entstehen ganze Filme aus Computeranimationen und Auflösungen von bis zu 4096 x 3112 Bildpunkten sind während der Herstellung des Materials Standard. Die neuen Vertriebsmedien wie zum Beispiel Blu-ray Discs bringen Filme in HD-Qualität (1920 x 1080) ins Wohnzimmer. Mit den Ansprüchen steigen auch die Anforderungen an die Hard- und Software, welche in diesem Produktionsumfeld eingesetzt werden. Da mit unkomprimierten Videodaten mit einer Farbtiefe von bis zu 16 Bit gearbeitet wird, werden bei Echtzeit-Aufgaben, wie zum Beispiel Aufnahme oder Wiedergabe von Videosequenzen, Datenraten von bis zu einem Gigabyte pro Sekunde benötigt. Dementsprechend müssen auch immense Datenmengen während einer Produktion effizient verwaltet werden. Während der Produktion eines 90 minütigen Kinofilms fallen im Schnitt 100 Terabyte Daten an, da wesentlich mehr aufgenommen als letztlich verwendet wird.

Um diesen Anforderungen gerecht zu werden, kommen Speichernetze zum Einsatz. Speichernetze erlauben einen direkten Zugriff von mehreren Applikations-Clienten, beispielsweise PC-Clienten, auf ein großes, zentrales Speichersystem. Selbst kleinere Systeme ermöglichen Datenraten im Bereich von einem Gigabyte pro Sekunde. Damit haben alle Clienten, die an ein Speichernetz angeschlossen sind, uneingeschränkten Zugriff auf das dort gespeicherte Bildmaterial. Dies ist notwendig, da viele Aufgaben aus Effizienz- und Kostengründen möglichst parallel erledigt werden. Dies führt jedoch zu einem Problem, da Speichernetze zwar bei exklusivem Zugriff genauso leistungsfähig sein können wie ein direkt angeschlossenes Speichersystem ("*Direct Attached Storage*"), aber sobald mehrere Applikations-Clienten konkurrierend zugreifen, das System nicht skaliert und enorm an Leistung einbüßt. Insbesondere bei Echtzeitanwendungen ist dies sehr kritisch. Daher besteht der Bedarf an Optimierungsmaßnahmen in Form von einer Koordination der I/O-Anfragen und der Möglichkeit, Echtzeitanwendungen priorisiert zu behandeln.

Der Einsatz von Speichernetzen nimmt in der Kinofilmproduktion zu. Den logistischen Vorteilen des zentralisierten Speicherns von Filmmaterial stehen die Nachteile in Form von Mangel an Skalierbarkeit und das Fehlen von "*Quality of Service*" (QoS) Mechanismen gegenüber. Die Voraussetzungen für den effizienten Einsatz eines Speichernetzes in der digitalen Nachbearbeitung von Filmmaterial sind nicht nur an der maximal verfügbaren Bandbreite des Speichernetzes festzumachen, sondern vielmehr an der Möglichkeit, diese auch mehreren Clienten parallel zur Verfügung zu stellen. Nachfolgend werden der Stand der Technik näher erläutert und die damit verbundenen Probleme aufgezeigt.

Die Kino-, Fernseh- und Werbe-Filmindustrie befindet sich in einem Wandel. Insbesondere der hohe Speicherbedarf, die Anforderungen an Datenrate und das Streben nach Optimierung des Produktionsablaufs treiben die Entwicklung voran. Die Branche ist bedacht, die Produktionszeit und damit direkt verbunden die Produktionskosten zu minimieren. Speichersysteme, die nur einem Rechner dediziert zur Verfügung stehen ("*Direct Attached Storage*") und damit das Kopieren der Daten von einem zentralen Speicher erforderlich machen, werden durch Speichernetze ("*Storage Area Network*") abgelöst. Speichernetze eröffnen die Möglichkeit des verteilten Arbeitens und machen das zeitaufwendige Kopieren überflüssig. Festplatten basierte Speichersysteme bieten eine hohe Leistungsfähigkeit bei sequenziellem Zugriff. Der Anwendungshintergrund kommt dieser Eigenschaft entgegen, da Videodaten in der Regel sukzessive als Stream gelesen und geschrieben werden.

Sobald jedoch mehrere Clienten konkurrierend auf ein Speichernetz zugreifen, nimmt die Performance des Systems rapide ab, da die Schreib- und Leseköpfe der Festplatten zu den angeforderten Daten bewegt werden müssen. Diese Kopfbewegungen sind im Vergleich zu dem eigentlichen Lese- oder Schreib-Vorgang sehr zeitintensiv und sind daher wenn möglich zu vermeiden. Auf lokalen Festplatten sorgt ein I/O-Scheduler auf Betriebssystemebene dafür, dass solche Kopfsprünge minimiert werden. Bei dem Einsatz von einem Speichernetz greifen jedoch mehrere Systeme unabhängig und ohne gegenseitiges Wissen auf eine geteilte Ressource zu. Bei zeitkritischen Anwendungen besteht Bedarf, einem oder mehreren Applikations-Clienten eine garantierte Mindest-Bandbreite zur Verfügung zu stellen, welches bei unkoordinierten Zugriff der einzelnen Clienten nicht möglich ist.

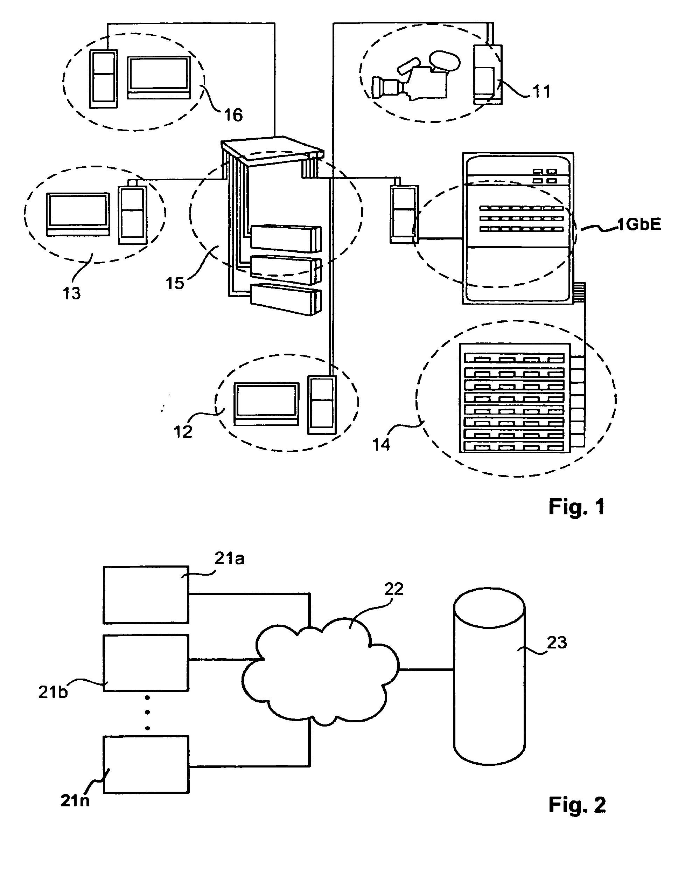

Fig. 1 zeigt wesentliche Komponenten für die verschiedenen Bereiche der digitalen Bildbearbeitung. Eine Akquirierung 11 ("*Ingest*"), eine Wiedergabe 12 ("*Playout*") sowie eine Online-Bearbeitung 13 ("*Online Processing*") des Filmmaterials gehören zu den zeitkritischen Aufgaben. Das Berechnen der Bildsequenzen 14 ("*Rendering*") ist zeitaufwendig, hat aber keine Echtzeit-Anforderungen. Um den Zugriff auf ein Speichernetz 15 (SAN) auf wenige Clienten zu beschränken, werden daher die Rechen-Knoten über Gateways kaskadiert. So können mehrere Render-Maschinen durch einen SAN-Clienten mit Daten über günstige Standard Netzwerk Technologie (1 GbE) versorgt werden, ohne dass der Verwaltungsaufwand für den Administrator 16 ("*Operator*") zu groß wird.

Im Folgenden wird zunächst allgemein auf die relevanten Teile der Infrastruktur einer modernen Postproduktions-Einrichtung eingegangen. Hierbei handelt es sich um den Bereich, der in Fig. 1 dargestellt ist. Es werden die einzelnen Komponenten samt ihrer leistungsrelevanten Parameter erläutert.

Fig. 2 zeigt eine stark vereinfachte Systemübersicht. Eine überschaubare Anzahl von Clienten 21a, 21b, ... hat über ein Speichernetzwerk 22 (SAN) Zugriff auf ein Speichersubsystem 23 ("*Storage*"). Die Anbindung erfolgt über breitbandige Netzwerke, welche in der Lage sind, hohe Datenraten zu bieten. Hierbei handelt es sich bisher nicht um Standard IT Netzwerke wie etwa Gigabit Ethernet, sondern um spezielle Technologien, welche im nächsten Abschnitt vorgestellt werden.

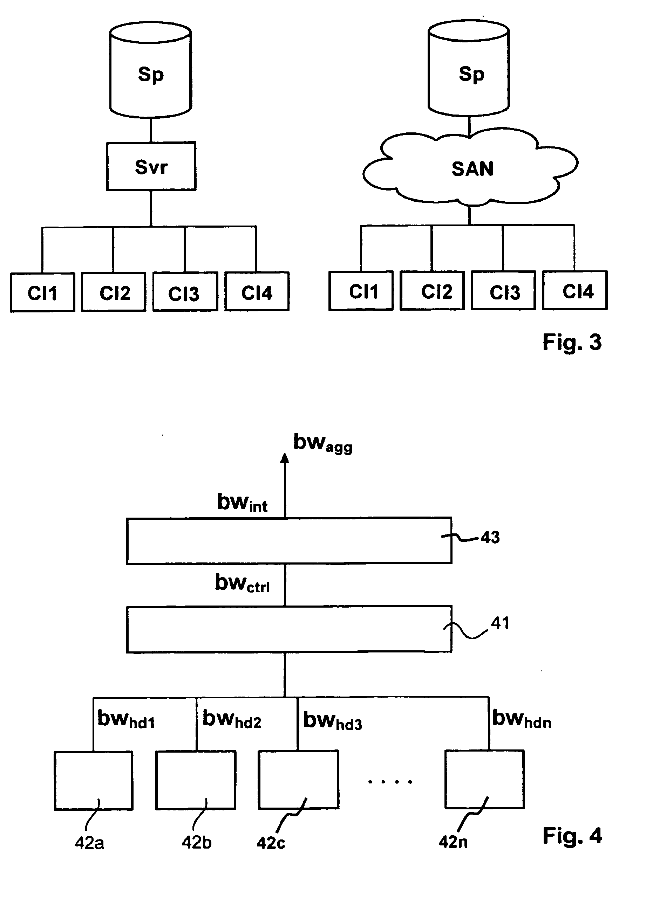

Ein Speichernetz stellt die Schnittstelle zwischen PC-Clienten und einem Speichersubsystem dar. Dabei existiert keine zentrale Serverinstanz, wie es bei "*Network Attached Storage*" *(NAS)* Systemen der Fall ist, die die Verwaltung des Speichersubsystems übernimmt. Der Vorteil eines SAN-Systems gegenüber NAS-Systemen liegt in der Art und Weise, wie auf den Speicher zugegriffen wird. Die Datenübertragung bei NAS-Systemen erfolgt über einen Server, der das Disksubsystem verwaltet. Das heißt, die Daten müssen durch dieses System transferiert werden. In einem Speichernetz entfällt der Server und die Clienten können direkt auf das Speichersubsystem zugreifen. Fig. 3 verdeutlicht diesen Sachverhalt. Auf der linken Seite ist ein Speicher (Sp) über einen Server Svr mit Clienten Cl1-Cl4 verbunden. Auf der rechten Seite ist ein Speicher Sp über ein Speichernetz SAN mit Clienten Cl1-Cl4 verbunden.

Bei SAN-Systemen werden verschiedene Übertragungstechnologien eingesetzt, die im Folgenden kurz vorgestellt werden.

Ein SCSI SAN verbindet ein Speichersubsystem über einen parallelen Bus mit einem PC-Clienten. An einen SCSI-Bus können je nach Protokollvariante bis zu 16 Geräte miteinander verbunden werden. Die Verbindung erfolgt entweder über Leiterbahnen auf einer Platine oder über Kabel. Die Daten werden über das SCSI-Protokoll übertragen. Der Einsatz von SCSI für den Aufbau eines Speichernetz ist beschränkt durch die Reichweite, die maximal 25 Meter beträgt.

"*Fibre Channel*" ist eine Technologie, die eigens für SAN-Umgebungen entwickelt worden ist. Folglich kommt die "*Fibre Channel*" Übertragungstechnik in den meisten großen SAN-Systemen zum Einsatz. Die Übertragung erfolgt hierbei seriell über das SCSI-Protokoll. Im Gegensatz zu SCSI können bei "*Fibre Channel*" mittels Glasfasern größere Distanzen überbrückt werden. Ferner ist das Übertragungsprotokoll in den Hardware-Schnittstellen implementiert, sodass geringe Latenzzeiten erreicht werden. Als weiterer Vorteil erweist sich eine höhere Datenraten von bis zu 4 *GBit/ s* pro "*Fibre Channel*" Anschluss.

Für den Aufbau einer "Fibre Channel" SAN-Umgebung stehen drei Topologien zur Verfügung: Punkt-zu-Punkt, "*Arbitrary Loop*" und "*Fabric*".

Die einfachste Weise stellt dabei die Punkt-zu-Punkt Topologie dar. Ein Speichersubsystem wird dabei direkt mit einem Clienten verbunden. Bei einer "*Arbitrary Loop*" können mehrere Clienten mit dem Speichersubsystem verbunden werden. Alle Geräte werden zu einem Ring zusammen gebunden. In diese Topologie können bis zu 126 Geräte eingebunden werden, aber immer nur zwei Geräte gleichzeitig und in einer Richtung Daten untereinander austauschen. Die "*Fabric*" Topologie kommt am häufigsten zum Einsatz. Theoretisch können in einer "*Fabric*" bis zu 15.5 Millionen Endgeräte über "*Fibre Channel Switches*" zusammengefasst werden. Alle Endgeräte, die an einem Switch angeschlossen sind, verfügen über die volle Bandbreite. Die Anzahl an "*Fibre Channel"* Ports innerhalb einer "*Fabric*" kann durch eine Kopplung von mehreren Switches erhöht werden. Dafür verfügen "*Fibre Channel Switches*" über Inter-Switch-Links. Die Organisation innerhalb einer Fabric erfolgt über das so genannte "*Zoning*". Alle Clienten, die miteinander kommunizieren dürfen, müssen zu einer gemeinsamen Zone gehören. Die Festlegung der Zonen wird im "*Fibre Channel Switch*" konfiguriert.

Bei der Datenübertragung innerhalb eines "*Fibre Channel*" Netzwerks werden die Bits seriell auf die Leitung gegeben. In den Topologien Punkt-zu-Punkt und "*Fabric*" können Daten mit dieser Datenrate auch bidirektional übertragen werden. Die mögliche Länge der Übertragungsstrecke hängt von dem verwendeten Übertragungsmedium ab. Der Standard sieht sowohl Kupferkabel, als auch Glasfasern für die Übertragung vor.

Das iSCSI SAN baut auf ein ähnliches Konzept wie "*Fibre Channel*" auf. Statt eines parallelen SCSI-Bus wird ein serielles Medium verwendet. Die Übertragung nutzt ebenfalls das SCSI-Protokoll, jedoch wird dieses nicht zur direkten Übertragung genutzt, sondern wird im TCP/IP-Protokoll gekapselt. So ist, statt spezieller Netzwerk-Hardware der Einsatz von Standard Ethernet Technologie (10 GbE) möglich, welches insbesondere aus Kostengründen ein Vorteil darstellt. Ferner können bestehende Ethernet-Infrastrukturen mit eingebunden werden. Der Nachteil liegt an der Kapselung des SCSI-Protokolls in das TCP/IP-Protokoll und dem damit verbundenen Protokoll-Overhead. Außerdem belastet das TCP/IP-Protokoll die CPU bei hohen Datentransfer sehr stark. Daher sollte beim Aufbau eines iSCSI SANs auf Netzwerkkarten zurückgegriffen werden, die das TCP/IP-Protokoll in Hardware implementiert haben.

Infiniband ist eine Übertragungstechnologie, die ebenfalls auf einer seriellen Übertragung basiert. Sie ist ursprünglich entwickelt worden, um den PCI-Bus innerhalb eines PC-Systems zu ersetzten. Mittlerweile wird Infiniband neben der Anwendung in Computing Clustern auch vermehrt in SAN-Umgebungen eingesetzt. Der Protokoll-Stack unterstützt ebenfalls das SCSI Protokoll, aber auch das TCP/IP Protokoll.

Mit heutigen Infiniband Host Channel Adaptern sind Datenraten von bis zu 20 GBit/s per RDMA möglich. Ferner sind Infiniband Switches verfügbar, welche es erlauben eine SAN Umgebung aufzubauen. Die hohen Datenraten in Kombination mit den niedrigeren Anschaffungskosten gegenüber Fibre Channel machen Infiniband zu einer interessanten Technologie für den Aufbau zukünftiger SAN-Umgebungen.

Das Speichersubsystem besteht aus einer Vielzahl an Festplatten, welche über einen RAID-Controller zu einem logischen Laufwerk zusammengefügt werden. Die Leistungsfähigkeit eines RAID-Systems hängt dabei von vielen Faktoren ab, wobei an dieser Stelle nur die wesentlichsten diskutiert werden.

Fig. 4 zeigt den Aufbau eines RAID-Systems bestehend aus einem RAID-Controller 41 und n Festplatten 42a, 42b, ..., sowie einer Netzwerk-Schnittstelle 43. In der Praxis werden häufig mehrere solcher Systeme in einem Gehäuse integriert und über ein SAN zusammen geschlossen.

Die Gesamtleistung ($bw_{agg}$) bezüglich der Datenrate eines RAID-Systems ergibt sich aus den Bandbreiten der einzelnen Komponenten (in Fig. 4 jeweils mit $bw_x$ gekennzeichnet). Unter der Annahme, dass die Daten linear auf alle Festplatten verteilt werden und ohne Redundanz gearbeitet wird, wird theoretisch eine aggregierte Bandbreite von

$$bw_{aggregate} = \min(\sum_{i=1}^{n}(bw_{hdi}), bw_{controller}, bw_{int\;erface})$$

erreicht. Im Idealfall, das heißt alle Festplatten sind baugleich und

$$bw_{int\;erface} \geq bw_{controller} \geq \sum_{i=1}^{n} bw_{hdi}$$

vereinfacht sich die Gleichung zu

$$bw_{aggregate} = n \cdot bw_{hd}$$

Die aggregierte Performance des Speichersubsystems ergibt sich wie vorangehend gezeigt aus den Einzelbandbreiten der verwendeten Komponenten und aus deren Verhältnis.

Im Folgenden werden die Komponenten näher evaluiert und die relevanten Einflussgrößen beleuchtet.

Die Datenrate einer Festplatte ergibt sich im Wesentlichen aus dem physikalischen Aufbau, der Schnittstellentechnologie sowie der Art und Weise, wie auf die Festplatte zugegriffen wird. Eine Festplatte besteht aus einer oder mehreren runden magnetisierten Metallscheiben, die auf einer Achse gelagert sind. Auf den Metallscheiben können beidseitig dauerhaft Informationen gespeichert werden. Bei aktuellen Festplatten stellt ein 512-Byte großer Sektor die kleinste Speichereinheit dar. Der Zugriff auf die Sektoren erfolgt über Rotation der Metallscheiben mit konstanter Winkelgeschwindigkeit und der radialen Bewegung des Kamms, auf welchem die Schreib- und Leseköpfe angebracht sind. Die Datenbereiche, die bei einem konstanten Radius der Köpfe auf den Scheiben erfasst werden, werden Zylinder genannt. Zur Beschleunigung des sequentiellen Zugriffs wird der erste Sektor eines Zylinder mit einem passend gewählten Winkelversatz zum letzten Sektors des vorherigen Zylinders angeordnet *("Skew")*. Die konstante Sektordichte und Rotation der Scheiben führt dazu, dass die Datentransferraten im äußeren Bereich der Festplatte höher sind als im inneren Bereich.

Derzeit sind Festplatten mit SCSI, Parallel- und Seriell-ATA, sowie "*Serial Attached*" SCSI (SAS) Schnittstellen verfügbar. Die nominellen Datenraten liegen bei P-ATA bei maximal 133 MB/s und bei SCSI bei bis 320 MB/s. Seriell-ATA in der Version 1.0 ermöglicht eine Transfergeschwindigkeit von 150 MB/s und in der Version 2.0 300 MB/s. "*Serial Attached*" SCSI kommt auf dieselbe Datenrate wie S-ATA in der Version 2.0.

Die Transferraten werden stark beeinflusst durch die Art des Zugriffs. Wenn die Anfragen nicht sequentiell erfolgen oder die Daten fragmentiert auf dem Disksubsystem sind, dann müssen die Köpfe auf einen anderen Zylinder wechseln. Dieser Wechsel wird "*Seek*" genannt. Die Seekzeiten sind abhängig von der Entfernung der aktuellen Kopfposition zu dem angeforderten Sektor und von der Rotationsgeschwindigkeit der Festplatte. Bei einer Festplatte, die mit 7200 Umdrehungen pro Minute dreht können die Seekzeiten bis zu 24 Millisekunden betragen und liegen im Mittel bei 8.3 Millisekunden.

Der RAID-Controller dient dem Betriebssystem als Schnittstelle zu den physikalischen Festplatten. Die Leistungsfähigkeit hängt im wesentlichen von dem RAID-Level und der Cache-Strategie ab. Bei dem RAID-Level werden im Grundsatz zwei Konfiguration unterschieden, die hinsichtlich der gegensätzlichen Aspekte Datensicherheit und Leistung optimiert sind. Insgesamt gibt es eine Fülle an RAID-Konfigurationen und Kombinationen aus beiden Aspekten, die aber nicht im Mittelpunkt dieser Arbeit stehen, so dass sich hier auf die beiden Wesentlichen beschränkt wird.

Ein RAID-System, welches als RAID 0 konfiguriert ist, ist ausschließlich auf Leistung ausgelegt. Es wird über alle Festplatten ein "*Striping*" durchgeführt, so dass alle Festplatten für Daten genutzt werden. Das bedeutet, dass die gesamten Daten nur einmal auf dem RAID-System vorhanden sind und somit beim Ausfall einer Platte oder mehreren Platten keine Datensicherheit besteht. Dafür kann das gesamte RAID-System genutzt werden.

Das RAID-Level 10 ist auf Datensicherheit ausgelegt. Es wird ein "*Striping*" über die Hälfte aller Festplatten durchgeführt und die andere Hälfte wird für eine Spiegelung der Daten genutzt. Durch diese Redundanz erhöht sich die Datensicherheit, da für den Fall eines Ausfalls einer Festplatte die Daten noch auf der gespiegelten Platte vorhanden sind. Die Spiegelung geht jedoch auf Kosten der Leistung, da für jeden Schreibvorgang auf das RAID-System zweimal geschrieben werden muss und beim Lesen auf Datenkonsistenz geprüft wird.

Ein RAID-Controller verfügt je nach Ausstattung über einen Puffer, der es erlaubt, Daten zwischenzuspeichern und den Plattenzugriff über Cache-Strategien zu optimieren. Es wird zwischen Lese- und Schreib-Cache Strategien unterschieden. Beim Schreiben sind die *"Write-Through"*- und die *"Write-Back"*-Strategie üblich. Ein RAID-Controller mit *"Write-Through"* Strategie verhält sich für das Betriebssystem wie ein Controller ohne Cache, da der Completion-Status erst dann gesendet wird, wenn alle Daten auf die Festplatte geschrieben worden sind. Die *"Write-Back"* Strategie sendet bereits nachdem die Daten im Cache liegen den Completion-Status. Somit können Laufzeitverzögerungen der physikalischen Festplatten ausgeglichen werden. Bei langen sequentiellen Zugriffen kann so ohne Unterbrechung auf die Festplatte geschrieben werden.

Bei lesendem Zugriff kommen die Strategien *"Read-Ahead"*, *"Adaptive-Read-Ahead"* und *"No-Read-Ahead"* zum Einsatz. Beim *"Read-Ahead"* wird direkt von den Festplatten gelesen. Die *"Read-Ahead"* Strategie liest zusätzlich zu jeder Anforderung voraus liegende Sektoren. So können sequentielle Anfragen aus dem Lese-Cache bedient werden. Der *"Adaptive-Read-Ahead"* Mechanismus führt einen *"Read-Ahead"* nur dann aus, wenn mindestens zwei aufeinander folgende Anfragen gestellt werden. Wird die Sequenz unterbrochen, wird kein "Read-Ahead" durchgeführt. Die obige Überlegung zur Leistungsfähigkeit ist von der Annahme ausgegangen, dass die Daten gleichmäßig auf alle Speichersubsysteme verteilt sind. Dafür bedarf es jedoch innerhalb einer SAN-Umgebung eines speziellen Dateisystems, was dies sicherstellt. Dieses wird im Folgende erläutert. Zunächst wird auf die Funktionsweise eines Cluster-Dateisystems eingegangen und den Unterschied zu anderen verteilt arbeitenden Dateisysteme erläutert. Anschließend werden Implementierungen vorgestellt, wobei der Hauptaugenmerk auf das *"StorNext"* Dateisystem gelegt wird, da es im Umfeld der professionellen Videoberabeitung häufig Anwendung findet.

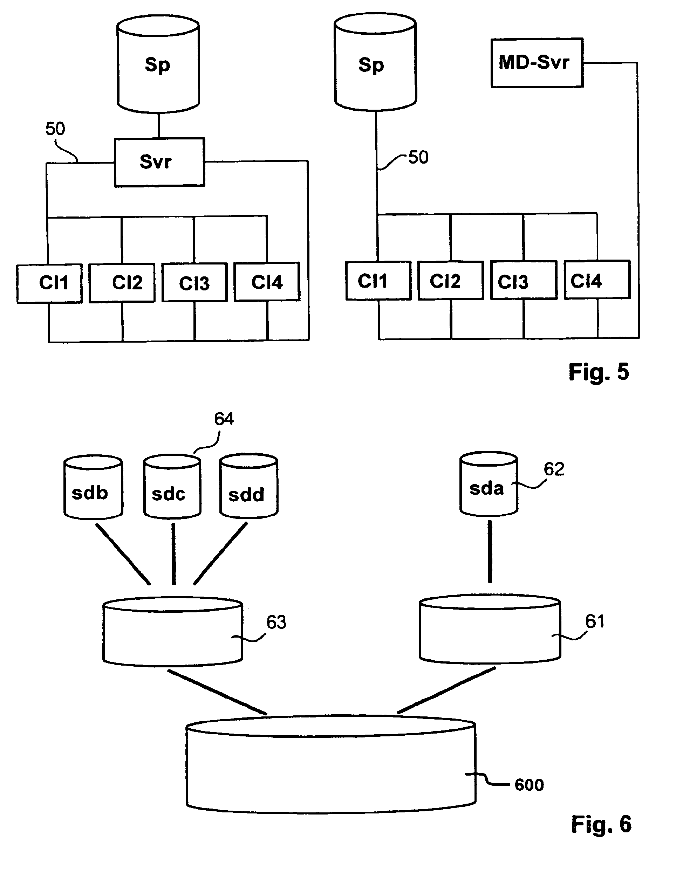

Ein Cluster-Dateisystem ist für den Einsatz in SAN-Systemen konzipiert. Im Gegensatz zu Netzwerk- oder verteilten Dateisystemen wie NFS oder GFS findet eine klare Trennung zwischen Daten- und Verwaltungs-Pfad statt. Ein Cluster-Dateisystem besitzt zwar auch eine zentrale Instanz, aber diese dient ausschließlich der Verwaltung von Meta-Informationen und dient nicht als Schnittstelle für den Datentransfer. Fig. 5 verdeutlicht diesen Sachverhalt. Der fett gedruckte Pfad 50 stellt das Nutz-Netz dar.

Beim Zugriff auf eine oder dem Anlegen einer Datei schicken die Clienten zunächst ein Anfrage an den Metadatenserver. Dieser muss dafür sorgen, dass mehrere Clienten nicht gleichzeitig auf dieselbe Datei modifizierend zugreifen. Dafür wird die Datei gegebenenfalls gesperrt und erst wieder freigegeben, wenn die Anfrage bearbeitet worden ist. Der Metadatenserver teilt den Clienten die zu den angeforderten Dateien gehörigen Blocknummern mit, auf die der Client dann direkt über das Speichernetz *("Fibre Channel", "Infiniband",* etc.) zugreifen kann. Der Zugriff erfolgt also blockorientiert und nicht wie bei Netzwerkdateisystemen dateiorientiert. Der Zugriff ist effizienter, da die zentrale Schnittstelle entfällt.

Die Anzahl von verfügbaren Clusterdateisystemen, die für den professionellen Einsatz geeignet sind, ist überschaubar. Dabei handelt es sich vornehmlich um die kommerziellen Implementierungen CXFS von SGI und Adic's StorNext.

Das StorNext Dateisystem ist de facto Standard im Umfeld der professionellen Videonachbearbeitung. Es erlaubt bei einer Blockgröße von 512 KByte Dateisysteme von bis 2 PByte zu adressieren. StorNext unterstützt sowohl Windows- als auch Unix-Clienten. Apple-Clienten können über das XSan Dateisystem, welches zu StorNext kompatibel ist, in das SAN eingebunden werden. Die Konfiguration des Dateisystems erfolgt über eine Konfigurationsdatei. Ein Metadatenserver kann bis zu acht Instanzen von StorNext Dateisystemen verwalten, wobei jede Instanz über eine eigene Konfigurationsdatei verfügt. Innerhalb der Konfiguration werden allgemeine Dateisystemeigenschaften wie Blockgröße oder maximale Anzahl an Clienten festgelegt. Ferner können mehrere StripeGroups definiert werden. Innerhalb einer StripeGroup werden einzelne Blockgeräte organisiert und zusammengefasst. Jeder RAID-Verbund erscheint dem Betriebssystem als ein Blockgerät, so dass über eine StripeGroup mehrere RAID-Systeme zu einer großen logischen Einheit verknüpft werden können. Ein StorNext Dateisystem kann mehrere StripeGroups verwalten, so dass eine Trennung zwischen den Metadaten und den Nutzdaten vorgenommen werden kann.

Fig 5. zeigt Anordnungen von Speicher Sp, Clienten Cl1-Cl4 und Server Svr bzw. Metadaten-Server MD-Svr.

Fig. 6 zeigt eine schematische Darstellung für ein StorNext-Dateisystem 600. Es ist die Hierarchie anhand eines Beispiels mit einer Metadaten "*Stripegroup*" 61 mit einem Blockgerät 62 und einer Daten "*Stripegroup*" 63 mit drei Blockgeräten 64 dargestellt.

Das Cluster Dateisystem CXFS ist eine Erweiterung des XFS Dateisystems von SGI. Im Gegensatz zu XFS steht es nicht unter der freien GNU Public License, sondern wird von SGI kommerziell vertrieben. Genau wie StorNext erlaubt es Windows-, U-nix- und MacOS-Clienten direkt über eine SAN-Infrastruktur auf das Speichersubsystem zuzugreifen. Der CXFS-Metadatenserver ist jedoch im Gegensatz zu StorNext ausschließlich für IRIX-Plattformen verfügbar. Daher ist CXFS eher in einem SGI Umfeld verbreitet.

US 7185174 offenbart mehrere Applikationen, die auf einen gemeinsamen Speicher zugreifen.

<u>Erfindung</u>

Aufgabe der Erfindung ist es, ein verbessertes Verfahren und eine verbesserte Vorrichtung zur Zugriffssteuerung mehrerer Applikationen, die jeweils als ein Applikations-Client in einer Betriebssystemumgebung einer Datenverarbeitungseinrichtung implementiert sind, auf ein gemeinsames Speichersystem anzugeben, die einen effizienten Datenaustausch zur Eingabe / Ausgabe (I/O) ermöglichen. Insbesondere soll der Umgang mit Multimediadaten in einer solchen Betriebsumgebung optimiert werden.

Diese Aufgabe wird erfindungsgemäß durch ein Verfahren und eine Vorrichtung zur Zugriffssteuerung mehrerer Applikationen nach den unabhängigen Ansprüchen 1 und 10 gelöst. Vorteilhafte Ausgestaltungen der Erfindung sind Gegenstand von abhängigen Unteransprüchen.

Die Erfindung umfasst den Gedanken eines Verfahrens zur Zugriffssteuerung mehrerer Applikationen, die jeweils als ein Applikations-Client in einer Betriebssystemumgebung einer Datenverarbeitungseinrichtung implementiert sind, auf ein gemeinsames Speichersystem, welches in der Betriebssystemumgebung in Form mehrerer Speicherblöcke abgebildet wird, die jeweils einem der Applikations-Clienten zugeordnet sind, wobei bei dem Verfahren:

- jedem Speicherblock ein lokaler I/O-Zugriffscontroller zugeordnet wird, welcher konfiguriert ist, einen Zugriff des zugeordneten Applikations-Clients auf den Speicherblock zu blockieren oder zuzulassen,
- lokale I/O-Zugriffscontroller, die jeweils einem gleichen Applikations-Client zugeordnet sind, einem lokalen Clienten zur Ablaufsteuerung zugeordnet werden, welcher konfiguriert ist, die dem gleichen Applikations-Client zugeordneten, lokalen I/O-Zugriffscontroller gemeinsam in einen Zustand "Zugriff erlaubt" oder einen Zustand "Zugriff blockiert" zu versetzen,
- in der Betriebssystemumgebung ein globaler I/O-Zugriffscontroller gebildet wird, welcher konfiguriert ist, an die lokalen Clienten zur Ablaufsteuerung Steuerinformationen zu übermitteln, und
- ein I/O-Zugriff der Applikations-Clienten auf einen oder mehrere der dem Applikations-Clienten jeweils zugeordneten Speicherblöcke des gemeinsamen Speichersystems einem zeitlichen Ablaufmuster entsprechend global geregelt wird, indem die lokalen Clienten zur Ablaufsteuerung die dem gleichen Applikations-Client zugeordneten lokalen I/O-Zugriffscontroller gemeinsam in den Zustand "Zugriff erlaubt" oder den Zustand "Zugriff blockiert" versetzen entsprechend der Steuerinformationen, die durch die lokalen Clienten zur Ablaufsteuerung von dem globalen I/O-Zugriffscontroller empfangen wird.

Nach einem weiteren Aspekt der Erfindung ist eine Vorrichtung zur Zugriffssteuerung mehrerer Applikationen geschaffen, die jeweils als ein Applikations-Client in einer Betriebssystemumgebung einer Datenverarbeitungseinrichtung implementiert sind, auf ein gemeinsames Speichersystem, welches in der Betriebssystemumgebung in Form mehrerer Speicherblöcke abgebildet ist, die jeweils einem der Applikations-Clienten zugeordnet sind, wobei bei der Vorrichtung:

- lokale I/O-Zugriffscontroller gebildet sind, die jeweils einem Speicherblock zugeordnet ist, wobei die lokalen I/O-Zugriffscontroller konfiguriert sind, einen Zugriff des zugeordneten Applikations-Clients auf den Speicherblock zu blockieren oder zuzulassen,
- lokale Clienten zur Ablaufsteuerung gebildet sind, denen jeweils lokale I/O-Zugriffscontroller eines gleichen Applikations-Clienten zugeordnet sind, wobei die lokalen Clienten zur Ablaufsteuerung konfiguriert sind, die dem gleichen Applikations-Client zugeordneten, lokalen I/O-Zugriffscontroller gemeinsam in einen Zustand "Zugriff erlaubt" oder einen Zustand "Zugriff blockiert" zu versetzen,
- in der Betriebssystemumgebung ein globaler I/O-Zugriffscontroller gebildet ist, welcher konfiguriert ist, an die lokalen Clienten zur Ablaufsteuerung Steuerinformationen zu übermitteln, und
- ein I/O-Zugriff der Applikations-Clienten auf einen oder mehrere der dem Applikations-Clienten jeweils zugeordneten Speicherblöcke des gemeinsamen Speichersystems einem zeitlichen Ablaufmuster entsprechend global geregelt ist, indem die lokalen Clienten zur Ablaufsteuerung die dem gleichen Applikations-Client zugeordneten lokalen I/O-Zugriffscontroller gemeinsam in den Zustand "Zugriff erlaubt" oder den Zustand "Zugriff blockiert" versetzen entsprechend der Steuerinformationen, die durch die lokalen Clienten zur Ablaufsteuerung von dem globalen I/O-Zugriffscontroller empfangen wird.

Bei dem Applikations-Clienten kann es sich in hier verwendeten Bedeutung um eine Hardware-Einheit wie zum Beispiel einen PC-Clienten oder einen eher anwendungsbezogenen Clienten handeln, beispielsweise eine Applikation auf einer Datenverarbeitungseinheit, beispielsweise einem Personalcomputer, so dass auch mehrere Applikations-Clienten auf ein und derselben Datenverarbeitungseinheit implementiert sein können.

Mit Hilfe des globalen I/O-Zugriffscontrollers wird für die beteiligten Applikations-Clienten, die auf das gemeinsame Speichersystem zugreifen können, eine koordinierte Zugriffssteuerung erreicht, indem die dem jeweiligen Applikations-Client zugeordneten lokalen I/O-Zugriffscontroller gemeinsam entweder in den Zustand "Zugriff erlaubt" oder den Zustand "Zugriff blockiert" versetzt werden. Nur wenn die lokalen I/O-Zugriffscontroller eines Applikations-Clients in den Zustand "Zugriff erlaubt" versetzt sind, kann der Applikations-Client bedarfsweise über die lokalen I/O-Zugriffscontroller auf zugehörige Speicherblöcke in dem gemeinsamen Speichersystem zugreifen. Im Zustand "Zugriff blockiert" ist dieses für alle lokalen I/O-Zugriffscontroller, die einem gemeinsamen Applikations-Client zugeordnet sind, verwehrt. Es wird so insbesondere vermieden, dass es zu Überschneidungen zwischen versuchten Zugriffen unterschiedlicher Applikationen auf das gemeinsame Speichersystem kommt.

Eine bevorzugte Weiterbildung der Erfindung sieht vor, dass mit der Steuerinformation im Rahmen des zeitlichen Ablaufmusters den lokalen Clienten zur Ablaufsteuerung jeweils wenigstens ein zeitliches Zugriffsfenster zugewiesen wird, in welchem die dem gleichen Applikations-Client zugeordneten lokalen I/O-Zugriffscontroller, die ansonsten im Zustand "Zugriff blockiert" sind, dann gemeinsam in den Zustand "Zugriff erlaubt" versetzt werden. Die Vergabe von zeitlichen Zugriffsfenstern, die manchmal auch als Zeitscheiben bezeichnet werden, stellt sicher, dass für die mehreren Applikations-Clienten jeweils ein Zugriff für eine bestimmte zeitliche Länge ermöglicht ist. Hierbei kann vorgesehen sein, dass die Applikations-Clienten alle nacheinander ein zeitliches Zugriffsfenster zugewiesen bekommen. Auf diese Weise wird eine Reihenfolge des Zugriffs festgelegt. Bei der Zuweisung der zeitlichen Zugriffsfenster können Prioritäten berücksichtigt werden, die dem globalen I/O-Zugriffscontroller bekannt sind. Beispielsweise können einzelne Applikations-Clienten bevorzugt gegenüber anderen behandelt werden. Eine solche Bevorzugung kann sich einerseits durch eine in der Reihenfolge frühere Zugriffsmöglichkeit dokumentieren. Eine Bevorzugung kann aber auch darin bestehen, dass einem Applikations-Clienten im Vergleich zu anderen Applikations-Clienten ein längeres zeitliches Zugriffsfenster zugewiesen wird. Allgemein müssen die Applikations-Clienten konfiguriert sein, Zugriffsanforderungen zu puffern, bis ihnen das zeitliche Zugriffsfenster die Ausführung solcher Zugriffsanforderungen ermöglicht.

Bei einer zweckmäßigen Ausgestaltung der Erfindung kann vorgesehen sein, dass mit der Steuerinformation im Rahmen des zeitlichen Ablaufmusters den lokalen Clienten zur Ablaufsteuerung jeweils zeitliche Zugriffsfenster gleicher Länge zugewiesen werden. Alternativ kann vorgesehen sein, dass den lokalen Clienten zur Ablaufsteuerung und somit den zugehörigen Applikations-Clienten unterschiedlich lange zeitliche Zugriffsfenster zugewiesen werden, beispielsweise um eine Berücksichtigung von Prioritäten zu ermöglichen. Hierbei kann eine beliebige Vielfalt der zeitlichen Länge der Zugriffsfenster realisiert werden.

Eine vorteilhafte Ausführungsform der Erfindung sieht vor, dass mit der Steuerinformation im Rahmen des zeitlichen Ablaufmusters den lokalen Clienten zur Ablaufsteuerung zeitliche Zugriffsfenster entsprechend einem jeweils angeforderten Anteil an einer Gesamtzugriffsbreite zugewiesen werden. Die Gesamtzugriffsbreite bestimmt sich nach den realisierten Systemvoraussetzungen in der Betriebsumgebung der Datenverarbeitungseinrichtung. Ein Applikations-Client kann seinen geforderten Anteil an der Gesamtzugriffsbreite als relative Größe (Prozentangabe) oder mittels einer konkreten Bandbreitenangabe einfordern.

Bevorzugt sieht eine Fortbildung der Erfindung vor, dass mit der Steuerinformation im Rahmen des zeitlichen Ablaufmusters den lokalen Clienten zur Ablaufsteuerung zeitliche Zugriffsfenster entsprechend zuvor zwischen den Applikations-Clienten verhandelter Service-Qualitäts-Anforderungen zugewiesen werden. Eine Service-Qualitäts-Anforderung kann beispielsweise durch eine von dem Applikations-Clienten benötigte Datenrate darstellen. Diese kann über die Länge der zugewiesenen Zeitscheibe reguliert werden, so dass Applikations-Clienten, die eine höhere Anforderung an Datenrate haben, ein längeres Zugriffsfenster zugewiesen bekommen.

Bei einer vorteilhaften Ausgestaltung der Erfindung kann vorgesehen sein, dass das den lokalen Clienten zur Ablaufsteuerung jeweils zugewiesene zeitliche Zugriffsfenster abgebrochen wird, wenn eine Inaktivität des zughörigen Applikations-Clienten festgestellt wird. Die Inaktivität kann durch eine lokale Instanz des I/O-Zugriffs-Controllers dedektiert werden. Hierbei kann zum Beispiel vorgesehen sein, dass nach einer vorbestimmten Zeit der Inaktivität abgebrochen wird. Dieser Zeitraum bis zum Abbruch kann für alle Applikations-Clienten oder den zugehörigen lokalen Clienten zur Ablaufsteuerung gleich gewählt sein. Aber auch die Festlegung unterschiedlicher Zeiträume bis zum Abbruch kann vorgesehen sein. Ferner ist es möglich, Inaktivität auf der Seite des globalen I/O Zugriffs-Controllers auf Basis der I/O Anfragen des Applikations-Clienten zu dedektieren. Hierbei werden vor dem Start eines neuen Scheduling-Durchgang nur die während des letzten Durchgangs eingetroffenen I/O Anfragen der Applikations-Clienten für das darauffolgende Scheduling Schema berücksichtigt.

Eine Weiterbildung der Erfindung kann vorsehen, dass die lokalen I/O-Zugriffscontroller jeweils als zur Laufzeit ladbares Modul gebildet werden.

Eine bevorzugte Weiterbildung der Erfindung sieht vor, dass jedem lokalen Clienten zur Ablaufsteuerung lokale I/O-Zugriffscontroller zugeordnet werden, die nicht nur dem gleichen Applikations-Clienten sondern auch noch Speicherlöcken in einem einzelnen Dateisystem zugeordnet sind. Ein Dateisystem kann mehrere physikalische Speicherblöcke zu einer logischen Speichereinheit zusammenfassen, so dass für Applikations-Clienten nur eine logische Speichereinheit sichtbar ist. Hierdurch können die Größe und die Leistung mehrerer Speicherblöcke aggregiert und für Applikations-Clienten genutzt werden. Bei einer zweckmäßigen Ausgestaltung der Erfindung kann vorgesehen sein, dass in der Betriebssystemumgebung ein weiterer globaler I/O-Zugriffscontroller gebildet wird, welcher der Arbeitsweise des globalen I/O-Zugriffscontrollers entsprechend arbeitet und den Zugriff auf ein weiteres gemeinsames Speichersystem, das wahlweise dem gemeinsamen Speichersystem entsprechend in der Datenverarbeitungseinrichtung implementiert ist, global regelt. Der weitere globale I/O-Zugriffscontroller kann in seiner Ausbildung und in seiner Arbeitsweise in Verbindung mit den anderen Elementen der Datenverarbeitungseinrichtung den Prinzipien des globalen I/O-Zugriffscontrollers entsprechend ausgeführt werden. Wahlweise können jedoch in einzelnen Konfigurationsmerkmalen auch Abweichungen vorgesehen sein. In ähnlicher Weise ist es möglich, dass das weitere gemeinsame Speichersystem nur hinsichtlich einzelner Konfigurationsmerkmale dem gemeinsamen Speichersystem entsprechend implementiert ist.

Zeichnung

Die Erfindung wird im Folgenden anhand von Ausführungsbeispielen unter Bezugnahme auf Figuren einer Zeichnung näher erläutert. Hierbei zeigen:

Fig. 1 eine schematische Darstellung einer bekannten Infra- struktur für eine Bearbeitung von Multimediadaten, insbesondere Filmdaten, nach der Produktion,

Fig. 2 eine schematische Darstellung für einen abstrakten Aufbau einer bekannten Datenverarbeitungseinrichtung mit mehreren Applikations-Clienten und einem gemeinsa- men Speichersystem,

Fig. 3 eine schematische Darstellung zum Vergleich eines be- kannten "*Attached Storage*"- und eines bekannten SAN- Systems,

Fig. 4 eine schematische Darstellung eines bekannten RAID- Systems,

Fig. 5 eine schematische Darstellung zum Vergleich der Funk- tionsweise eines bekannten Netzwerkdateisystem (links) und eines bekannten Cluster-Dateisystems (rechts),

Fig. 6 eine schematische Darstellung für ein bekanntes Stor- Next-Dateisystem,

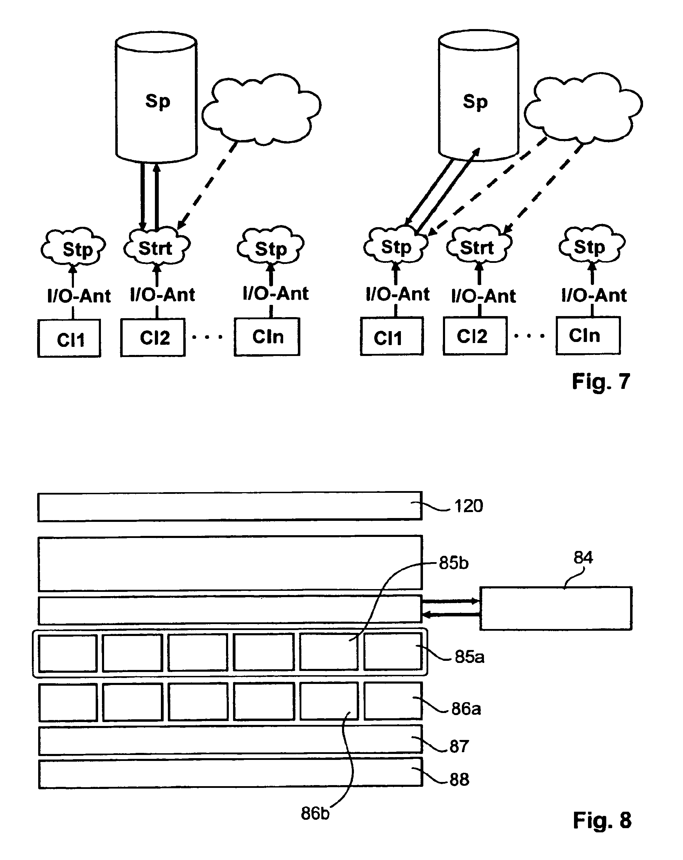

Fig. 7 eine schematische Darstellung zur Beschreibung der Funktionalität eines Verfahrens und einer Vorrichtung zur Zugriffssteuerung mehrerer Applikationen,

Fig. 8 eine schematische Darstellung eines Schichtmodells ei- nes Applikations-Clienten in einer SAN-Umgebung,

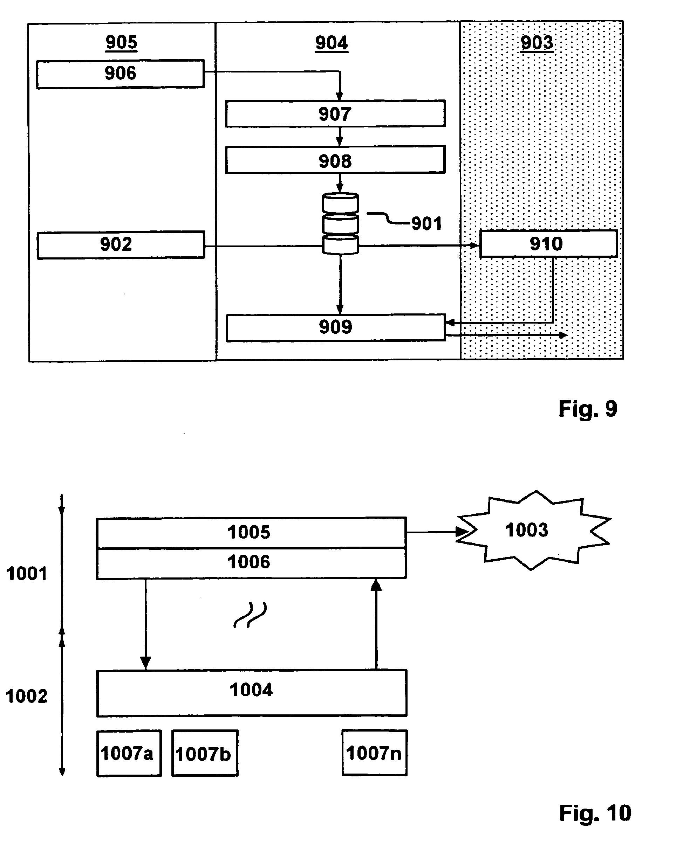

Fig. 9 eine schematische Darstellung einer Einbettung eines I/O-Schedulers in einem Linux-Betriebssystem-Kernel,

Fig. 10 eine schematische Darstellung eines Netzwerkschnitt- stelle für einen Benutzerraum mit einer Kernel- Benutzerraumkommunikation,

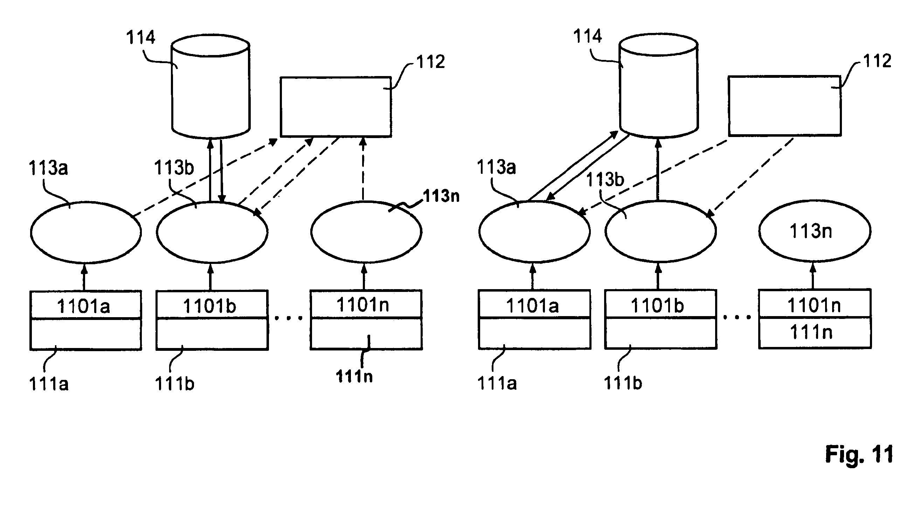

Fig. 11 eine schematische Darstellung des Aufbaus einer Vor- richtung zur Zugriffssteuerung mehrerer Applikationen ("*Scheduling Framework*") zu zwei verschiedenen Zeit- punkten,

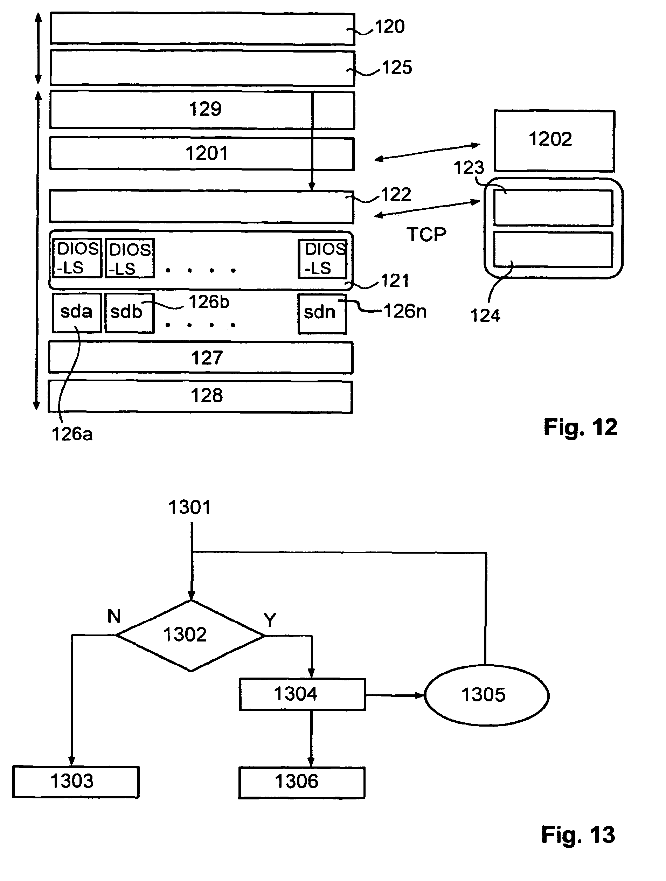

Fig. 12 eine schematische Darstellung eines DIOS-Frameworks,

Fig. 13 ein Ablaufdiagramm für einen Verzögerungsmechanismus eines lokalen DIOS-Schedulers,

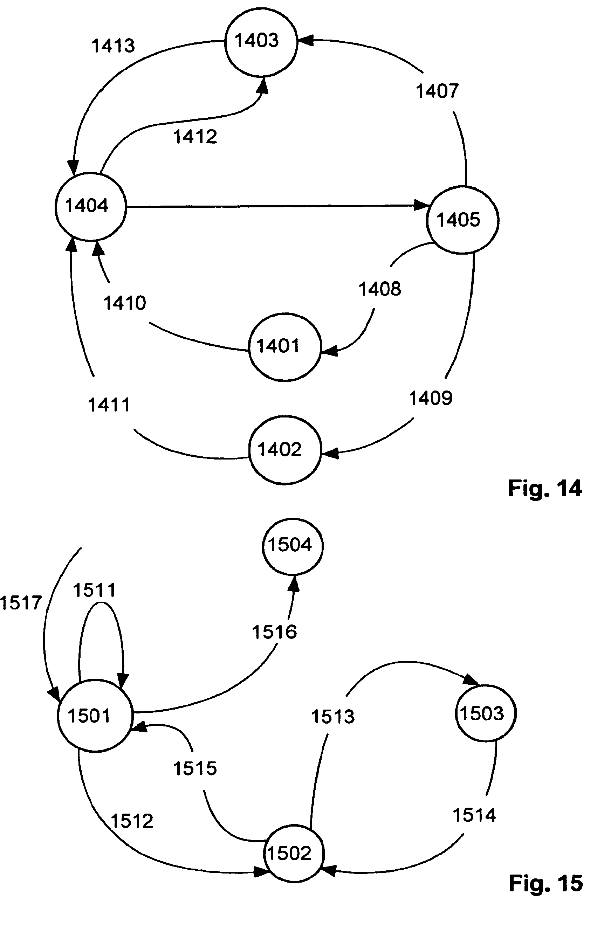

Fig. 14 eine schematische Darstellung einer Zustandsmaschine eines lokalen DIOS-Schedulers,

Fig. 15 eine schematische Darstellung einer Zustandsmaschine eines DIOS-Clients,

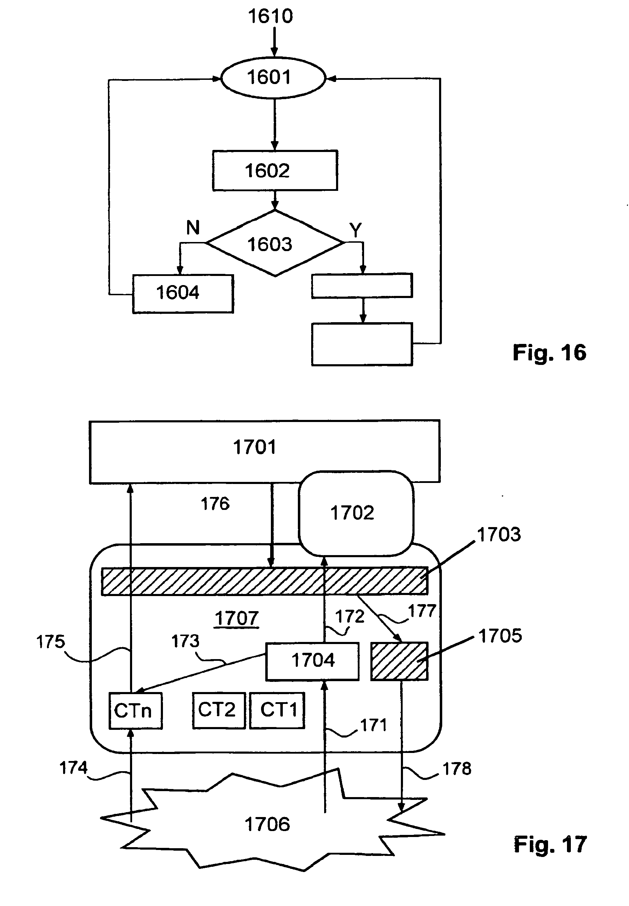

Fig. 16 ein Ablaufdiagramm eines DIOS-Serverthreads,

Fig. 17 eine schematische Darstellung einer Architektur eines DIOS-Servercornel-Moduls,

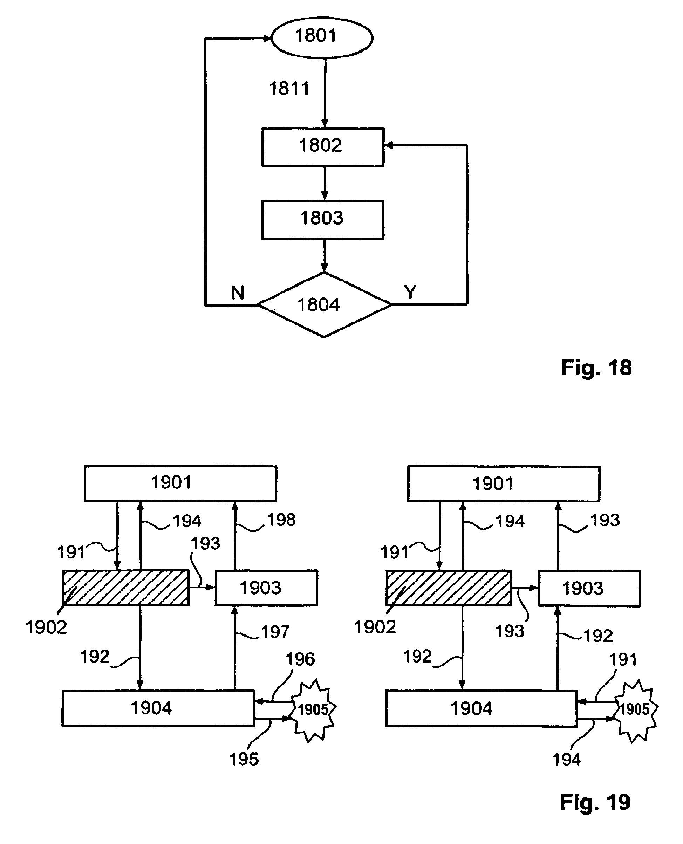

Fig. 18 ein Ablaufdiagramm eines globalen I/O-Schedulers (glo- baler I/O-Zugriffscontroller),

Fig. 19 eine schematische Darstellung zur Erläuterung einer Funktionsweise eines DIOS-QoS-API,

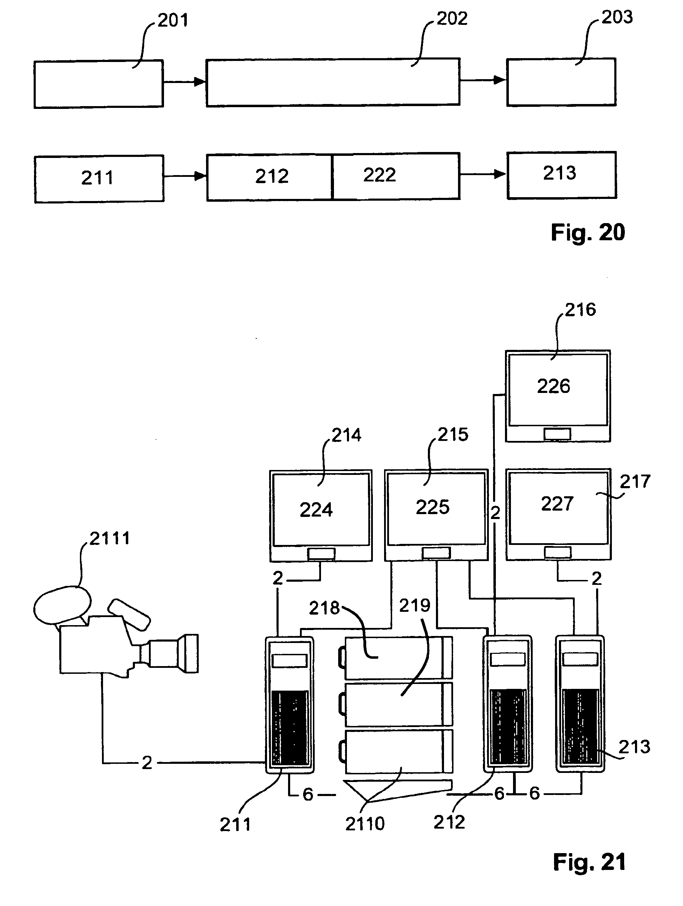

Fig. 20 ein Blockschaltbild für einen Workflow und

Fig. 21 eine Darstellung eines Testaufbaus für den Workflow in Fig. 20.

Die Koordination von I/O-Zugriffen von mehreren Applikations-Clienten innerhalb eines Speichernetzes bedarf einerseits der Kenntnis von allen I/O-Zugriffen der Clienten und andererseits einer Möglichkeit, bei konkurrierendem Zugriff, I/O-Anfragen von allen Clienten - bis auf einem - zu verzögern.

Fig. 7 zeigt eine schematische Darstellung eines Schichtmodells eines Applikations-Clienten in einer SAN-Umgebung. Ein I/O-Pfad ist jeweils mittels eines durchgezogenen Pfeils dargestellt, ein Netzwerk-Pfad mittels eines gestrichelten Pfeils.

Die Teile der Fig. 7, die als Wolke 71 dargestellt sind, werden nachfolgend evaluiert. Insbesondere die Frage, wie und vor allem wo die Verzögerung stattfindet, ist für das Design von Bedeutung. Grundlegende Anforderungen an das System werden durch applikationsunabhängig, dateisystemunabhängig, performant und modular und erweiterbar beschrieben. Ferner bedarf ein globales Scheduling von I/O-Anfragen ein geeignetes Kommunikationsmediums und Modells. Speicher Sp, Stop Stp, I/O-Ant und Start Strt sind gezeigt.

Die eingangs genannten Anforderungen implizieren bereits, dass der Verzögerungsmechanismus zum Beispiel innerhalb eines Linux-Betriebssystems integriert werden kann, da alle I/O-Anfragen auf das Cluster-Dateisystem abgefangen und gegebenenfalls verzögert werden müssen.

Fig. 8 zeigt eine schematische Darstellung eines Schichtmodells eines als PC-Client ausgeführten Applikations-Clienten in einer SAN-Umgebung.

Jede Applikation 81, die auf ein Dateisystem zugreift, tut dies über ein virtuelles Dateisystem ("*Virtual File System*" - VFS 82). In dieser Schicht wird ein Mapping der POSIX-Aufrufe auf das darunter liegende Dateisystem 83 durchgeführt. Da alle I/O-Anfragen über das virtuelle Dateisystem erfolgen, bietet sich die Möglichkeit, an dieser Stelle anzusetzen. Dies zieht jedoch einige Probleme nach sich: Latenzzeiten, Unterscheidung zwischen I/O-Anfragen notwendig und Eingriff in Build-In-Teil des Kernels.

Für den Fall, dass die I/O-Zugriffe bereits im VFS blockiert werden, müssen die Anfragen erst durch den Dateisystem-Client beim Metadaten-Server angefordert werden, bevor der eigentliche Datentransfer stattfindet. Dies führt zu einer höheren Latenzzeit, was bei der Koordinierung zu Problemen führen kann. Ferner müssten aus allen I/O-Anfragen diejenigen herausgefiltert werden, die auf das Cluster-Dateisystem zugreifen. Der dritte Punkt betrifft zum einen die Aktualisierungszeit bei der Entwicklung und zum anderen die Handhabbarkeit. Sobald im Build-In-Teil des Linux Kernels Änderungen vorgenommen werden, muss der komplette Kernel kompiliert werden, so dass die Entwicklung wesentlich aufwendiger wird. Außerdem widerspricht dies der Anforderung an die Modularität des Systems.

Ein Cluster-Dateisystem bietet grundsätzlich die optimalen Voraussetzungen für ein Verteiltes Scheduling, da zum einem alle relevanten I/O-Anfragen in dieser Schicht auflaufen und zum anderen bereits eine Infrastruktur in Form von einem Client-Server-Gerüst vorhanden ist. Aufgrund der Tatsache, dass die einzigen in dem Anwendungshintergrund relevanten Cluster-Dateisysteme (StorNext, CXFS) nicht quelloffen sind, scheidet eine Erweiterung eines Cluster-Dateisystems aus. Außerdem soll gemäß den Anforderungen eine dateisystemunabhängige Lösung bevorzugt werden.

Der I/O-Scheduler 85a, 85b, ... dient der Optimierung des Blockgeräte-Zugriffs. Die I/O-Anfragen werden gesammelt und sortiert, bevor sie an den Blockgeräte-Treiber 87 weitergereicht werden. Für das Sammeln und Umsortieren stehen vier Algorithmen zur Verfügung. Ab der Linux Kernel Version 2.6.10 kann die Heuristik zur Laufzeit dynamisch für jedes Blockgerät 86a, 86b, ... festgelegt werden. Wird ein Scheduler mehreren Blockgeräten zugeordnet so existieren auch mehrere Instanzen des Schedulers, welche sich einen Speicherbereich teilen. Der I/O-Scheduler ist in Form von einem Kernel-Modul im so genannten elevator eingebettet und stellt einzig den Scheduling Algorithmus dar.

Fig. 9 zeigt eine schematische Darstellung einer Einbettung eines I/O-Schedulers 404 in einem Linux-Betriebssystem-Kernel. Ein Page Cache/VFS905 enthält die Funktionen _make_request (*q) 906 und _generic_unplug(*q) 902.

Die Funktionen elevator_merge_req_fn(*q) 907, elevator_add_req_fn(*q) 908 and elevator_next_req(*q) 909 denen im I/O-Scheduler ein "elevator" vorangestellt sind, sind generische Funktionen innerhalb des elevators. Der elevator setzt die Funktionen auf die Implementierung des gewählten I/O-Schedulers um. Die Darstellung in Fig. 9 lässt vermuten, dass die "*request*"-Warteschlange innerhalb des I/O-Schedulers gehalten wird, aber dem ist nicht so. Alle Funktionen, die innerhalb des Kernel-Moduls die Ablaufsteuerung durchführen, bekommen die dafür benötigten Daten innerhalb einer Struktur übergeben. Die Datenhaltung ist daher objektorientiert anzusehen. So kann jede Instanz mit individuellen Daten arbeiten, ohne dass es aufgrund des gemeinsamen Speicherbereichs zu Speicherkonflikten kommt.

Ferner zeigt Fig. 9 den Ablauf eines I/O-Zugriffs. Nach Einfügen der Anfrage ("*request*") in die Anfrage-Warteschlange 901 ("*request queue*"), wird vom Kernel zeitgesteuert die Funktion 902 _*generic_unplug* aufgerufen, welche für den Fall, dass ein Request verfügbar ist den Treiber 903 antriggert. Der Treiber fordert anschließend eine Anfrage an, Funktion request_fn(*q) 910. Der I/O-Scheduler 904 stellt somit nur eine Schnittstelle dar und kann nur eingeschränkt die Initiative übernehmen. Dieser Fall wird im Laufe des nächsten Abschnitts näher betrachtet, wo die vier zur Verfügung stehenden Scheduler vorgestellt werden.

Der No-Operation I/O-Scheduler ist die einfachste Implementierung. Wie der Name schon sagt, werden keine I/O-Anfragen umsortiert, sondern sofort an den Gerätetreiber 903 durchgereicht. Bei zufälligen Blockgeräte-Zugriffen von verschiedenen Applikationen führt der Einsatz des NOOP-Schedulers zu vielen Seeks auf dem Block-Device und somit zu einer geringen Performance. Für sequentielle Blockzugriffe einer einzelnen Anwendung, wie in dieser Arbeit aufgrund der Eigenschaften der Applikationen vorausgesetzt, erreicht der NOOP-Scheduler die beste Performance bei geringstmöglicher Latenz, da die I/O Anfragen sofort an den Geräte Treiber weitergereicht werden.

Der Deadline-Scheduler ist eine Weiterentwicklung des NOOP-Schedulers. Statt die Anfragen direkt weiterzureichen werden sie gesammelt und der Sektorgröße nach sortiert. Dabei werden für Schreib- und Lese-Zugriffe getrennte Listen geführt. So können Seeks reduziert werden. Eine Zeitschranke verhindert, dass Anfragen von Prozessen, die zu einem weiten Seek der Festplatte führen werden, nicht "verhungern" (J. Quade et al., "Kerntechnik Folge 19", Linux Magazin, vol. 03, S. 88-92, 2005; R. Love, Linux Kernel Development, Novell Press, 2005).

Der Anticipatory I/O-Scheduler arbeitet nach demselben Ansatz wie der Deadline I/O-Scheduler. Jedoch wird eine ausgefeiltere Heuristik zugrunde gelegt. Der Scheduler führt eine Statistik über die I/O-Anfragen einzelner Prozesse und versucht anhand dieser die nächsten Zugriffe zu antizipieren. Gegebenenfalls wird bis zu sechs Millisekunden gewartet, ob der vorhergesagte Request eintrifft. Trifft eine Anfrage auf Sektoren ein, die in unmittelbarer Nähe der aktuellen Position liegen, so wird diese direkt durchgereicht. Für die Heuristik werden sowohl die zeitlichen Abstände der I/O-Anfragen als auch die mittlere Entfernung der Sektornummern zugrunde gelegt (J. Quade et al., "Kerntechnik Folge 19", Linux Magazin, vol. 03, S. 88-92, 2005; R. Love, Linux Kernel Development, Novell Press, 2005).

Der Completely Fair Queueing Algorithmus versucht, jeden I/O-Prozess gleich zu behandeln. Dazu wird für jeden Prozess eine Schreib- und Lese-Liste geführt und die Aufträge sortiert. Der Scheduler entnimmt aus jeder Liste nach dem Round-Robin-Verfahren eine Anzahl an Requests, sortiert diese und reicht sie an den Gerätetreiber weiter. Das Ziel ist es, jedem Prozess den gleichen Anteil an der vom Blockgerät zur Verfügung gestellten Bandbreite zu gewähren (J. Quade et al., "Kerntechnik Folge 19", Linux Magazin, vol. 03, S. 88-92, 2005; R. Love, Linux Kernel Development, Novell Press, 2005).

Der Linux-IO-Scheduler erfüllt alle Anforderungen für eine Integration eines Verzögerungsmechanismus'. Die Tatsache, dass er zur Laufzeit gewechselt werden kann und dass alle relevanten I/O-Anfragen an dieser Stelle abgefangen werden können tragen zu dieser Entscheidung bei. In Anbetracht des Anwendungshintergrunds stellt der No-Operation Scheduler eine gute Basis für die Implementierung des Verzögerungsmechanismus' dar.

Eine weitere wichtige Designentscheidung ergibt sich aus der Notwendigkeit einer Netzwerk-Kommunikation zwischen den beteiligten Clienten. In diesem Zusammenhang gilt es zu klären, wo und wie die Netzwerk-Schnittstelle implementiert wird. Grundsätzlich stehen zwei Bereiche im Betriebssystem zur Verfügung Userspace und Kernelspace, dessen Für und Wider im Folgenden kurz gegenübergestellt wird.

Die Implementierung der Netzwerkschnittstelle im Userspace (Benutzerraum) bedarf einer zusätzlichen Kernel-Userspace-Schnittstelle, da sich der I/O-Scheduler im Kernel befindet. Für die Kommunikation zwischen dem Kernel und einer Userspace-Applikation stehen in einem Linux-Betriebssystem drei Möglichkeiten zur Verfügung IOCTL, Systemcalls und Netlink-Sockets.

Die ersten beiden Möglichkeiten scheiden aus, da sie nur einer Userspace-Applikation erlauben, initiativ Teile des Kernels aufzurufen und der Kernel nicht die Möglichkeit besitzt, eine Kommunikation zu initiieren. Daher kommt ausschließlich der Einsatz von Netlink-Sockets in Frage.

Fig. 10 zeigt eine schematische Darstellung eines Netzwerkschnittstelle für einen Benutzerraum 1001, auch Userspace genannt, und einen Kernel 1002 mit einer Kernel-Benutzerraumkommunikation.

Die Userspace-Applikation kommuniziert über ein Netzwerk 1003 mit den anderen Clienten und leitet die Informationen an einen Netlink-Server 1004 innerhalb des Kernels weiter. Im Benutzerraum 1001 sind dafür ein Netzwerk Client 1005 und ein Netlink Client 1006 gezeigt. Die Vorteile liegen in der einfachen Implementierung der Netzwerkschnittstelle im Userspace und in der standardisierten POSIX-API, die für Netzwerkfunktionen zur Verfügung steht. Ferner kann im Userspace auf Frameworks wie zum Beispiel die ACE-Bibliothek zurückgegriffen werden. Der Umweg über den Userspace, sowie die Nutzung eines Frameworks führt jedoch zu zusätzlichem Overhead (J. Corbet et al., Linux Device Drivers, O'Reilly, Third Edition 2005). Im Kernel sind mehrere I/O Scheduler 1007a, 1007b, 1007n gezeigt.

Als Alternative zur Userspace-Implementierung kann die Umsetzung direkt im Kernel erfolgen. Statt über einen Netlink-Server 1004 mit einer Userspace-Applikation zu kommunizieren, wird direkt über einen Socket mit einem anderen Clienten kommuniziert. Der Overhead, der durch den Umweg über den Userspace entsteht könnte somit gespart werden. Jedoch bedarf es guter Kenntnisse in Kernel-Programmierung, um dies umzusetzen. Neben des Performance-Gewinns spricht auch die aktuelle Kernel-Entwicklung für eine Implementierung im Kernelspace, was daran abzusehen ist, dass ab Kernel 2.6.19 eine neue Kernel-API zur Verfügung steht, welche die Netzwerk-Programmierung im Kernel erleichtert.

Die kernel-interne Lösung wird bei dem Ausführungsbeispiel als die geeignetere Variante angesehen. Der Aufwand, einen Netlink-Socket-Server zu implementieren, ist mit dem einer kernel-internen Netzwerk-Schnittstelle vergleichbar.

Im Bereich der Ablaufsteuerung ("*scheduling*") von Echtzeitanwendungen wird grundsätzlich zwischen zwei Ansätzen unterschieden, nämlich dynamisches Scheduling und statisches Scheduling, welche jeweils weiter in "*preemptive*" und "*non preemptive*" differenziert werden. Neben den Eigenschaften des Schedulings stehen noch zwei Topologien des Schedulings zur Auswahl: zentrales Scheduling und verteiltes Scheduling.

Diese Aspekte werden im Folgenden näher betrachtet.

Ein Scheduler wird als dynamisch bezeichnet, wenn er die Scheduling-Entscheidung zur Laufzeit trifft. Dabei werden die aktuellen Anforderungen des Systems berücksichtigt und auf eventuelle Änderungen dynamisch reagiert. Daher werden dynamische Scheduler auch "*Online-Scheduler*" genannt.

Ein statischer Scheduler arbeitet nach einem vorher festgelegten deterministischen Schema. Änderungen der Anforderungen können zur Laufzeit nicht berücksichtigt werden. Diese Scheduler werden daher auch "*Pre-Run-Time-Scheduler*" bezeichnet. Ein Scheduler, der "*preemptive*" arbeitet ist in der Lage einen laufenden Prozess zu unterbrechen, um einen höher priorisierten Prozess zu bevorzugen. Diese Methode bietet eine höhere Flexibilität, jedoch steigt der Verwaltungsaufwand erheblich, da zusätzliche Mechanismen dafür sorgen müssen, dass ein niedrig priorisierter Prozess nicht "verhungert". Beim "*non preemptive Scheduling*" kann ein laufender Prozess nicht unterbrochen werden. Der Scheduler muss die Abarbeitung abwarten und kann erst anschließend auf eine höher priorisierte Anforderung reagieren.

Wird das Scheduling von einer zentralen Stelle durchgeführt, wird von zentralem Scheduling gesprochen. Dabei gibt es im System eine Instanz, in der alle Informationen zusammenlaufen und die Scheduling-Entscheidungen getroffen werden. Diese Instanz stellt den kritischen Punkt ("*single point of failure*") des Systems dar. Das System arbeitet nach dem Client-Server Prinzip.

Beim verteilten Scheduling hat jeder der beteiligten Clienten die Kenntnis von allen anderen Clienten. Die Clienten handeln die Scheduling-Entscheidungen untereinander aus. Diese Art des Scheduling ist robuster als zentrales Scheduling, aber auf Kosten der Effizienz. Während der Aushandel-Phase (Arbitrierung) können beispielsweise keine I/O-Zugriffe stattfinden und Leistung geht verloren.

Der gewählte Anwendungshintergrund beschreibt ein überschaubares Szenario. Das Scheduling-System soll eine geringe Anzahl an aktiven Clienten koordinieren, welche sequenziell auf das Speichersystem zugreifen. Daher bietet sich in einem ersten Schritt ein statisches Scheduling an, da es effizienter in Bezug auf Overhead ist. Aus diesem Grunde ist auch ein nicht unterbrechbares Scheduling zu bevorzugen. Des Weiteren bietet sich bei dem Ausführungsbeispiel ein zentrales Scheduling an, da es zum einen der Arbeitsweise eines Cluster-Dateisystem entspricht und zum anderen das System eine überschaubare Anzahl an Clienten zu bedienen hat und somit das Client-Server-Prinzip effizienter ist.

Nach den Vorüberlegungen wird nachfolgend das Konzept des gesamten Scheduling Frameworks für das gewählte Ausführungsbeispiel vorgestellt.

Fig. 11 zeigt eine schematische Darstellung des Aufbaus einer Vorrichtung zur Zugriffssteuerung mehrerer Applikationen ("*Scheduling Framework*") zu zwei verschiedenen Zeitpunkten. Ein I/O-Pfad ist mit durchgezogenen Pfeilen dargestellt, ein Netzwerk-Pfad mit gestrichelten Pfeilen.

Einzelnen Clienten 111a, 111b, ... kommunizieren mit einem übergeordneten Scheduler 112 und melden I/O-Requests 1101a, 1101b, ... an. Ein lokale I/O-Scheduler 113a, 113b, ... blockiert die aufgelaufenen I/O-Requests 1101a, 1101b, .... Der übergeordnete Scheduler 112 weist der Reihe nach den einzelnen Clienten 111a, 111b, ... Zeitscheiben (Zeitfenster) zu, in denen auf ein Speichersystem 114 zugegriffen werden darf.

Die Granularität des Scheduling beeinflusst die Performance des Systems. Je größer die Zeitscheiben sind, desto länger können die einzelnen Clienten sequentiell arbeiten. Jedoch verschlechtern lange Scheduling-Intervalle die Antwortzeiten des Systems und es werden größere Applikations-Buffer benötigt. Mit Scheduling-Intervall ist die Zeit gemeint, die der Zeitscheibenberechnung zugrunde gelegt wird. Also die Zeit, die auf alle Clienten aufgeteilt wird. Die Dimensionierung dieses Parameters hängt also stark von den Anforderungen der jeweiligen Applikation ab. Daher macht es Sinn, die Länge des gesamten Scheduling-Intervalls für den Benutzer des Frameworks konfigurierbar zu machen.

Um Defizite bekannter Speichernetze auszugleichen, ist ein verteilt arbeitendes I/O-Scheduling System entwickelt worden. In den nächsten Abschnitten werden zunächst die Struktur des Frameworks und die allgemeinen Funktionen sowie Schnittstellen der einzelnen Komponenten erläutert. Anschließend wird die Funktionsweise der einzelnen Module detailliert beleuchtet.

Fig. 12 zeigt eine schematische Darstellung eines "*Distributed I/O-Scheduling*" *(DIOS)* Frameworks. Gezeigt sind unter anderem ein virtuelles File System 129 (VFS), ein Dateisystem Client 1201 und ein Metadaten-Server 1202.

Das DIOS-Framework weist fünf Komponenten auf, die von einem Applikations-Client 120 umfasst sind. Den Hauptbestandteil bilden vier Kernelmodule: ein DIOS-Local Scheduler (DIOS-LS) 121, ein DIOS-Client 122, ein DIOS-Server 123 und ein DIOS-Global Scheduler (DIOS-GS) 124, welche dynamisch zur Laufzeit geladen werden können. Ferner stellt das System eine Userspace Library (DIOS-QoS API) 125 zur Verfügung, welche als optionale Schnittstelle für Applikationen fungiert. Ein gemeinsames Speichersystem ist mittels mehrerer Speicherblöcke 126a, 126b, ... abgebildet. Der Blockgeräte-Treiber 127 fragt eingehende Daten beim I/O Subsystem 121, 126 ab und leitet diese an die eigentliche Hardware-Komponente 128 weiter. Diese kann beispielsweise aus einem Fibre-Channel Host Bus Adapter bestehen.

Das System ist modular aufgebaut und arbeitet applikationsunabhängig. Einzig die optionale Nutzung der QoS-Bibliothek (DIOS-QoS API 125) bedarf eines Eingriffs in die Applikation. Die Modulabhängigkeiten beschränken sich auf DIOS-Client 122 → DIOS-Local Scheduler 121, DIOS-QoS API 125 → DIOS-Client 122 und DIOS-Global Scheduler 124 → DIOS-Server 123 und werden im Fehlerfall durch das Betriebssystem abgefangen.

Der DIOS-LS 121 ersetzt im Ausführungsbeispiel den lokalen I/O-Scheduler eines Linux-Betriebssystems. Es existiert pro angeschlossenem Speichersubsystem eine Instanz von dem Modul. Es dient der Blockierung und der Bearbeitung von I/O-Anfragen für eine definierte Zeitspanne. Die zugrundeliegende Heuristik zur Bearbeitung der Anfragen entspricht der des NOOP-Schedulers.

Der DIOS-Client 122 und der DIOS-Server 123 dienen als Kommunikationsschnittstelle zwischen den einzelnen Applikations-Clienten und dem übergeordneten globalen I/O-Scheduler (DIOS-GS 124). Ferner dient der DIOS-Client 122 als zentrale Stelle eines Clienten, der alle Instanzen des lokalen I/O-Schedulers 121 synchronisiert. Der DIOS-Server 123 übernimmt ausschließlich die Übertragung der Nachrichten an die Clienten. Für die eigentliche Ablaufsteuerung ist der globale DIOS-Scheduler 124 zuständig. Diese Trennung dient dem Zweck der Modularität und ermöglicht somit, dass der Scheduling-Algorithmus auf einfache Art und Weise ohne das darunter liegende System zu verändern ausgetauscht werden kann. Dies ist sogar dynamisch im laufenden Betrieb möglich.

Das DIOS-LS-Modul 121 exportiert Funktionen, die vom DIOS-Client 122 aufgerufen werden, um Kommandos an die Instanzen des lokalen I/O-Schedulers weiterzureichen. Bei der Initialisierung übergibt der DIOS-Client 122 den DIOS-LS-Modulen eine Callback-Referenz, über welche die Kommunikation zwischen dem DIOS-LS 121 und dem DIOS-Client 122 realisiert.

Die Kommunikation zwischen dem DIOS-Server 123 und dem DIOS-Clienten 122 erfolgt über ein auf TCP/IP-basierendes Protokoll. Die Umsetzung des Protokolls erfolgt im DIOS-Server 123 sowie im DIOS-Client 122, so dass der globale Scheduler (DIOS-GS 124) keine Kenntnis von diesem Protokoll hat.

Die Schnittstellen zwischen dem DIOS-Server 123 und dem verteilt arbeitenden I/O-Scheduler 121 bestehen ebenfalls aus asynchronen Kernelfunktionen und einem Callback-Mechanismus. Die Userspace Library 125 und der DIOS-Client 122 kommunizieren über einen Netlink-Socket. Die Userspace Bibliothek 125 stellt einer Applikation eine Schnittstelle in Form von exportierten Funktionen zur Verfügung. Es stehen für jede API-Funktion jeweils eine synchrone, als auch eine asynchrone Variante zur Auswahl.

Neben diesen Schnittstellen, stellt das Framework eine Anwender-Schnittstelle über das Sys-Filesystem zur Verfügung. Darüber kann der Benutzer im laufenden Betrieb Parameter des Systems ändern. Alle Werte, die im Folgenden als frei wählbar oder definierbar bezeichnet werden, können über diese Schnittstelle konfiguriert werden. Ferner stellt die Sys-Filesystem-Schnittstelle Statusinformationen zur Verfügung. Das Konzept und Design der einzelnen Module wird in den nachfolgenden Abschnitten dargestellt.

Das Kommunikationsprotokoll ist nachrichtenbasiert und setzt auf dem TCP/IP-Protokoll auf. Die Sicherungsschicht des TCP/IP-Protokolls übernimmt die Aufgabe der Flusskontrolle, so dass das proprietäre Protokoll allein zum Austausch von Informationen zwischen dem Server und den einzelnen Clienten genutzt wird.

Tabelle 1: Übersicht der zur Verfügung stehenden Nachrichten-Typen, sowie enthaltenden Informationen (mit x gekennzeichnet) des Kommunikationsprotokolls

| Typ | Betriebsart | Timeslice (Zeitfenster) | "*applied*" Bandbreite | "*available*"Bandbreite | "*physical*" Bandbreite |
|---|---|---|---|---|---|
| CONFIG | - | - | - | - | x |
| CONN CLOSE | - | - | - | - | - |
| ACK | - | - | - | - | - |
| 44cmCMD | "*best effort*" "*realtime*" x "*noop*" "*break*" | x - - - | - x - - | - - - - | - - - - |
| APPLY REQ | - | - | - | - | - |
| APPLY BW | - | - | x | - | - |
| ACK_ APPLIED-BW | - | - | x | x | - |
| RELEASE BW | - | - | - | - | - |

Die einzelnen Nachrichten-Typen sind in Tabelle 1 aufgeführt. Bis auf die CONN_CLOSE- und die RELEASE_BW-Nachricht werden alle Nachrichten unidirektional eingesetzt. Das Freigeben von reservierter Bandbreite (RELEASE_BW) und das Schließen der Verbindung (CONN_CLOSE) kann sowohl vom DIOS-Client 122 als auch vom DIOS-Server 123 initiiert werden. Die CONFIG-Nachricht dient der Anmeldung des DIOS-Clients 122 beim DIOS-Server 123 und teilt diesem darüber mit, über welche physikalischen Bandbreite das System verfügt. ACK-Nachrichten werden vom DIOS-Client 122 verschickt, wenn das über die CMD-Nachricht zugewiesene Zeitfenster *("timeslice")* abgelaufen und der Datentransfer eingestellt worden ist. Der DIOS-Client 122 verschickt eine APPLY_REQ-Nachricht, sobald sich eine I/O-Anfrage in einer der Warteschlangen des lokalen I/O-Schedulers 121 befindet und verzögert worden ist. Der verteilte Scheduler antwortet mit einer ACK_APLLIED_BW-Nachricht auf eine Bandbreitenreservierung (APPLY_BW). Das Antwortpaket enthält sowohl die reservierte, als auch die noch verfügbare Bandbreite des Speichersystems.

Der lokale I/O-Scheduler (DIOS-LS) 121 basiert auf dem NOOP-Scheduler, da sich im Ausführungsbeispiel der NOOP-Scheduler im Einsatzumfeld von Speichernetzen als der Geeignetste von den vier im Linux Kernel zur Verfügung stehenden I/O-Schedulern erwiesen hat. Die Funktion des DIOS-LS 121 innerhalb des DIOS-Frameworks besteht darin, I/O-Anfragen zu blockieren bis der übergeordnete I/O-Scheduler 124 die Erlaubnis erteilt. Daher unterscheidet der DIOS-LS 121 zunächst zwischen zwei elementaren Zuständen: blockierend und nicht blockierend, die über ein globales Flag reguliert werden. Diese beiden Zustände gliedern sich in weitere Unterzustände und Betriebsmodi, welche in den folgenden Abschnitten erläutert werden. Insbesondere die Realisierung des blockierenden Zustands hat sich als schwierig erwiesen und bedarf für das weitere Verständnis des Designs einer näheren Betrachtung.

Der folgende Abschnitt zeigt die Funktionsweise des blockierenden Zustandes. Im Anschluss werden die beiden untergeordneten Zustände des blockierenden Zustands näher erläutert.

Die oben aufgezeigten Eigenschaften des Linux-IO-Schedulers in Kombination mit der Tatsache, dass mehrere Instanzen des Schedulers existieren, machen bei dem gewählten Ausführungsbeispiel die Umsetzung des Blockierungs-Mechanismus kompliziert. Dabei ist nicht das Blockieren einer I/O-Anfrage das Problem, sondern vielmehr die Wiederaufnahme der Bearbeitung. Der Blockgeräte-Treiber übergibt bei einer I/O-Anfrage eine Referenz auf einen Speicherbereich, der alle notwendigen Informationen für den Scheduler enthält. Unter anderem auch eine Referenz, welche rekursiv auf die Funktion im Treiber verweist, die einen Request anfordert und benutzt werden kann, um den Treiber anzutriggern. Wenn nun eine I/O-Anfrage geblockt werden soll und somit der Treiberfunktion, statt des angeforderten Requests eine NULL-Referenz zurück gegeben wird, muss der Handle auf die übergebene Struktur zwingend bewahrt werden, da sonst der I/O-Scheduler nicht mehr in der Lage ist, den Treiber anzutriggern. Der Umstand, dass für jede der existierenden Instanzen diese Referenz selbstverständlich auf einen anderen Speicherbereich mit individuellen Informationen verweist, jedoch alle Instanzen sich nur einen globalen Speicherbereich teilen, muss dieser Handle außerhalb des globalen Speicherbereichs gehalten werden. Dies ist nur innerhalb eines individuellen Kernel-Threads möglich, wobei jegliche Ausprägungen von Kernel-Threads wiederum eine Referenz benötigen. Mit Ausprägungen sind die im Kernel zur Verfügung gestellten, vordefinierten Kernel-Threads wie zum Beispiel Work-Queues gemeint. Die einzige Art von Kernel-Threads, welche nicht über eine Referenz angetriggert werden müssen, stellen Timer-Objekte dar. Die Betonung liegt an dieser Stelle ausdrücklich auf antriggern, da natürlich auch Timer-Objekte einen Handle zur Initialisierung und Deinitialisierung benötigen, sich jedoch sozusagen durch Ablauf des Timeouts selbst antriggern.

Der Einsatz von Timer-Objekten erlaubt die Implementierung eines Polling-Mechanismus, der abhängig vom vorgegebenen Timer-Timeouts den Treiber rekursiv antriggert. Der Einsatz eines Polling-Mechanismus' verursacht keine nennenswerte Latenz. Im schlechtesten Fall entsteht eine Verzögerung von einer Millisekunde, welche gemessen an der Verarbeitungsdauer (beispielsweise 200 Millisekunden bei fünf aktiven Clienten) vernachlässigt werden kann.

Fig. 13 zeigt ein Ablaufdiagramm für einen Verzögerungsmechanismus eines lokalen DIOS-Schedulers.

Das Ablaufdiagramm beginnt am Eingang 1301 mit elv_next_req(*q). Im Schritt 1302 wird überprüft, ob geblockt ist. Ist dies nicht der Fall, so wird zum Schritt 1303 verzweigt, was bedeutet, return q->req. Im anderen Fall wird zu Schritt 1304 init_timer(*q) verzweigt. Von dort aus kann es sowohl in eine Warteschleife 1305 als auch zum Schritt 1306 "return NULL" weitergehen. Von der Warteschleife 1305 wird wieder zum Schritt 1302 übergegangen mit "q->el v_next_req(*q)".

Fig. 13 stellt nur die wesentlichen Bestandteile dar, die zur Erklärung des Verzögerungs-Mechanismus notwendig sind. Ferner ist die Namensgebung der Funktionen und der übergebenen Struktur exemplarisch zu sehen und entspricht nicht dem tatsächlichen Sachverhalt.

Der Idle-Zustand beschreibt das blockierende Verhalten des DIOS-LS 121 (vgl. Fig. 12), wenn der Client keine I/O-Anfragen gestellt hat. In diesem Zustand verweilt der Client solange, bis eine Applikation auf das Speichernetz zugreift. Der Scheduler hält die Anfrage zurück und schickt eine APPLY_REQ-Nachricht an den DIOS-GS 124. Anschließend geht der Scheduler über in den Busy-Zustand, der im nächsten Abschnitt vorgestellt wird.

Der Busy-Zustand zeigt an, dass ein Request in der Warteschlange ist und geblockt worden ist. In diesem Zustand werden keine APPLY_REQ-Nachrichten mehr an den globalen Scheduler geschickt, sondern darauf gewartet, die in der Warteschlange befindlichen Anfragen bearbeiten zu können. In diesem Zustand wird in kontinuierlichen Abständen (1 ms) ein Polling durchgeführt und überprüft, ob der DIOS-GS 124 die Erlaubnis zur Bearbeitung erteilt hat. Trifft diese nach einer variabel definierbaren Anzahl von Poll-Intervallen (default 10000) nicht ein, so reicht der Scheduler die Anfragen an den Treiber durch und geht in den NOOP-Modus.

Dieser Betriebsmodus verhält sich exakt wie ein NOOP-Scheduler und wird daher auch NOOP-Modus genannt. Im NOOP-Modus werden keine I/O-Anfragen geblockt, sodass der Scheduler immer im nicht blockierenden Zustand ist. Nach Laden des Moduls befindet sich der Scheduler in diesem Modus. Ferner geht der Scheduler für den Fall eines schwerwiegenden Fehlers in diesen Modus zurück. So wird gewährleistet, dass bei Fehlverhalten des Systems, wie zum Beispiel den Absturz des DIOS-Servers 123, die einzelnen Clienten zumindest Zugriff auf das Speichernetz haben. Der Scheduler kann auch durch den globalen Scheduler 124 explizit in diesen Modus versetzt werden. Dies geschieht zum Beispiel, wenn der globale Scheduler entladen wird.

Im Scheduling-Betrieb befindet sich der lokale Scheduler (DIOS-LS 121) zunächst immer im blockierenden Zustand. Erst die Erlaubnis des übergeordneten Schedulers veranlasst den DIOS-LS 121 I/O-Anfragen für eine definierte Zeitdauer an den Blockgeräte-Treiber weiterzureichen. Die Erlaubnis wird in Form eines Tokens dem Client übergeben. Nach Ablauf der Zeitscheibe kehrt der Scheduler wieder in den blockierenden Zustand zurück und gibt das Token zurück zum Server.

Der Scheduling-Betrieb ist nochmal in zwei Arten unterteilt: Best-Effort-Modus und Realtime-Modus.

Der Best-Effort-Modus kommt zum Einsatz, wenn die Applikation 120 (vgl. Fig. 12) keine Mindest-Bandbreite angefordert hat. Der Scheduler reicht die I/O-Anfragen bis zum Ablauf der Zeitscheibe durch und geht dann wieder in den blockierenden Zustand. Ein zweites Abbruch-Kriterium sorgt dafür, dass wenn innerhalb einer Zeitscheibe alle I/O-Anfragen bearbeitet worden sind, nicht unnötig bis zum Ablauf der Zeitscheibe gewartet wird: Der so genannte Idle-Timer. Der Idle-Timer wird immer bei Aktivität, das heißt sobald ein Request vom Dateisystem alloziert oder vom elevator umsortiert wird, neu initialisiert. Für den Fall, dass der Scheduler über eine variabel definierbare Zeitdauer (default 30ms) inaktiv ist, wird das Token an den globalen I/O-Scheduler zurückgegeben.

Der Realtime-Modus findet Anwendung, wenn eine Applikation 120 (vgl. Fig. 12) eine feste Bandbreite gemakelt hat. Das grundsätzliche Verhalten gleicht dem des Best-Effort-Modus mit der Ausnahme, dass der Zeitschlitz nicht durch den Idle-Timer beendet werden kann. Stattdessen kommt eine zusätzliche Flusskontrolle zum Einsatz, welche sich aufgrund des semantischen Wissens der angeforderten Bandbreite anbietet. Der Scheduler summiert die Datenmenge jedes I/O-Requests auf und bricht den Zeitschlitz ab, sobald das transferierte Datenvolumen innerhalb des Zeitschlitzes der gemakelten Bandbreite entspricht.

Nachdem vorangehend die Eigenschaften der einzelnen Zustände erläutert worden sind, zeigt Fig. 14 das Zusammenspiel und die Übergänge der Zustände. Es ist eine schematische Darstellung einer Zustandsmaschine eines lokalen DIOS-Schedulers 121 (vgl. Fig. 12) gezeigt.

In den Zuständen Best-Effort 1401, Realtime 1402 und NOOP Mode werden I/O-Anfragen bearbeitet. Aufgrund der Übersichtlichkeit sind in Fig. 14 nicht alle Übergänge in den NOOP-Mode dargestellt. Der Übergang in den NOOP-Modus ist aus jedem der vier Zustände möglich.

Der DIOS-Client 122 (vgl. Fig. 12) dient als Netzwerk-Schnittstelle für die lokalen I/O-Scheduler 121 und übernimmt die Umsetzung des oben vorgestellten Protokolls. Ferner existiert im Gegensatz zu den lokalen I/O-Schedulern 121 nur eine Instanz des Clients, so dass der DIOS-Client 122 die Zentrale innerhalb eines Clientensystems darstellt. Aufgrund der Tatsache, dass der Client auf Funktionen des lokalen I/O-Schedulers 121 zugreift, muss zunächst das DIOS-LS-Modul geladen werden. Die Modulabhängigkeit wird vom Betriebssystem-Aufruf ("*insmod*") überprüft und liefert eine Fehlermeldung zurück, wenn das DIOS-LS-Modul nicht geladen ist.

Ein weiterer Zustand 1404 ist der "Blocked Idle" Zustand. Von diesem wird im Übergang 1406 auf einen Zustand 1405 "Blocked Busy" übergegangen. Der Übergang 1406 folgt bei I/O-Anfrage vom Treiber/Signalisierung falls kein Token empfangen wurde (timeout) wird im Übergang 1407 vom Zustand 1405 in den Zustand 1403 übergegangen. Wird ein Token empfangen so wird vom Zustand 1405 entweder in den Zustand 1401 oder in den Zustand 1402 übergegangen. Der Übergang 1408 erfolgt bei "Token empfangen/start idle timer", der Übergang 1409 zum Zustand 1402 erfolgt bei "Token empfangen/Datenmenge = 0", auch als "reset bite count" bezeichnet. Vom Übergang 1410 vom Zustand 1401 zum Zustand 1404 erfolgt bei "Zeitschlitz vorbei oder bei timeout" ein Übergang 1411 vom Zustand 1402 zum Zustand 1404 erfolgt bei "Zeitschlitz vorbei" oder "Datenmenge erreicht". Ein Übergang 1412 "goto noop" ist zwischen Zustand 1404 und 1403 dargestellt. Ein Übergang 1413 "init dios" ist vom Zustand 1403 zum Zustand 1404 gezeigt.

Fig. 15 zeigt eine schematische Darstellung einer Zustandsmaschine eines DIOS-Clients 122 (vgl. Fig. 12).

Der Disconnect-Zustand 1501 ist der Initial-Zustand nach erfolgreichem Laden des Moduls. Der Client versucht innerhalb dieses Zustands eine Verbindung zum DIOS-Server aufzubauen. Falls dies nicht gelingt wird in kontinuierlichen Abständen ein erneuter Versuch gestartet. Dies ist im Übergang 1511 "Server nicht erreichbar - erneuter Versuch" gezeigt. Solange der Client keine Verbindung zum Server hat, wird der DIOS-LS 121 in den NOOP-Modus versetzt. Die Anmeldung beim DIOS-Server 123 enthält die Informationen über die Datenrate der physikalischen Anbindung des Clienten.

Nach erfolgreicher Anmeldung, Übergang 1512, befindet sich der DIOS-Client 122 im Idle-Zustand 1502. In diesem Zustand werden Nachrichten vom Server empfangen und in Form von Funktionsaufrufen innerhalb des DIOS-LS verarbeitet. Die Rückmeldung des DIOS-LS 121 erfolgt asynchron über einen Callback-Mechanismus, welcher im nächsten Abschnitt näher erläutert wird.

Der Wait-Zustand 1503 dient der besseren Übersicht, denn aufgrund der asynchronen Schnittstelle zwischen DIOS-LS 121 und des DIOS-Clients 122 existiert kein wirklicher WarteZustand. Die Notwendigkeit besteht nicht, da der lokale I/O-Scheduler 121 definitiv eine Rückmeldung liefert. Den einzigen Fall der dazu führen würde, dass er dies nicht tut, stellt ein Systemabsturz dar, wobei dieser Fall serverseitig behandelt werden muss. Ferner muss der lokale Scheduler immer die Möglichkeit haben eine Nachricht zu senden, zum Beispiel wenn eine neue Anfrage in der Queue aufgelaufen ist.

Im Übergang 1513 "Kommando empfangen - Funktionsaufruf" wird vom Zustand 1502 zum Zustand 1503 übergegangen. Im Übergang 1514 "callback vom DIOS-LS - sende Nachricht zum Server" wird vom Zustand 1503 zum Zustand 1502 übergegangen in Übergang 1515 "Verbindung verloren - setze DIOS-LS auf NOOP" wird vom Zustand 1502 in den Zustand 1501 übergegangen. Im Übergang 1516 "DIOS-LS nicht vorhanden" wird vom Zustand 1501 zum Endezustand 1504 übergegangen. Der Einsprung 1517 in den Zustand 1501 erfolgt bei "insmod - set DIOS-LS to NOOP".

Der DIOS-Server 123 des Distributed I/O-Scheduling Frameworks stellt die zentrale Kommunikationseinheit dar. Es werden Schnittstellen für einen verteilten Scheduler zur Verfügung gestellt, die es ermöglichen die einzelnen Clienten zu koordinieren. Ferner übernimmt der Server 123 die Organisation der einzelnen Verbindungen und schafft somit eine klare Trennung zwischen dem eigentlichen Scheduling Algorithmus und Verwaltungsaufgaben. In den folgenden Abschnitten wird zunächst die Clienten-Verwaltung erläutert, anschließend auf die Betriebsmodi des Servers eingegangen und abschließend die Struktur erläutert.

Jeder Client, der beim Server angemeldet ist, wird auf eine Objekt-Struktur abgebildet. Innerhalb dieser Struktur werden alle wesentlichen Eigenschaften des Clienten gehalten, wie zum Beispiel IP-Adresse, Socket-Referenz oder Bandbreiten. Die einzelnen Clienten-Objekte werden in einer globalen Liste verwaltet.

Der Server besitzt keine Modulabhängigkeiten und kann somit auch ohne die Existenz eines übergeordneten Schedulers arbeiten. Daraus resultiert, dass zwei Betriebsmodi unterschieden werden: Standalone-Betrieb und Scheduling-Betrieb.

Der Standalone-Betrieb ermöglicht einen dynamischen Wechsel des DIOS-GS 124 (vgl. Fig. 12), ohne dass das gesamte Framework neu gestartet werden muss. Der Server befindet sich nach dem Ladevorgang im Standalone-Betrieb. In diesem Betriebmodus werden eingehende Verbindungen angenommen, in die Clienten-Liste eingefügt und anschließend der Client in den NOOP-Modus versetzt.

Der Scheduling-Betrieb setzt einen globalen Scheduler voraus, welcher sich bei dem Server registriert. Die Registrierung erfolgt über eine exportierte Funktion, welche dem globalen Scheduler einen Handle auf die Clienten-Liste und zu Synchronisationszwecken einen Spinlock zurückgibt. Verständlicherweise kann immer nur ein globaler Scheduler aktiv sein, so dass für den Fall, dass im Scheduling-Betrieb ein weiterer globaler Scheduler versucht die Registrierung durchzuführen, dieser abgewiesen wird. Nach der Registrierung werden alle Clienten in den blockierenden Modus versetzt.

Fig. 16 zeigt ein Ablaufdiagramm eines DIOS-Serverthreads. Der Einstieg 1610 "insmod" erfolgt in den Zustand 1601 "Idle". Bei einer hereinkommenden Verbindung wird im Übergang 1611 "incoming connection" von 1601 zum Schritt 1602 "init client objekt und thread" übergegangen. Vom Schritt 1602 wird zum Schritt 1603 übergegangen in dem überprüft wird, ob "dios-gs registriert ist". Ist dies nicht der Fall, so wird im Schritt 1604 der Client auf "NOOP" gesetzt und zum Schritt 1601 weitergegangen. Ist die Antwort im Schritt 1603 positiv, so wird zum Schritt 1605 "break client" und danach zum Schritt 1606 "callback to dios-gs", und von dort zum Schritt 1601 weitergegangen.

Die Arbeitsweise des DIOS-Servers 123 entspricht im Grundsatz der des Standalone-Betriebs, mit dem Unterschied, dass der neue Client nicht in den NOOP-Modus, sondern in den blockierenden Zustand versetzt wird. Ferner wird im Scheduling-Betrieb über eine Callback-Referenz, welche bei der Registrierung vom globalen Scheduler übergeben werden muss, eine Rückmeldung an den globalen Scheduler geliefert.

Der DIOS-Server 123 besteht aus einem Server-Thread, dessen Funktionsweise in Fig. 16 dargestellt ist und mehreren Client-Threads (CT). Die Anzahl der Client-Threads richtet sich nach der Anzahl angemeldeter Clienten, so dass jedem Clienten ein dedizierter Client-Thread zugeordnet ist. Der Server-Thread nimmt nur strukturelle Änderungen an der Clienten-Liste vor. Hiermit sind Änderungen wie Einfügen oder Löschen von Clienten-Objekten gemeint, nicht die Änderung von Werten innerhalb des Objekts. Ausgenommen davon sind Initial-Werte wie Thread-ID, IP-Adresse und Socket-Referenz, welche bei der Initialisierung des Clienten-Objekts einmalig gesetzt werden. Die einzelnen Client-Threads haben nur Zugriff auf die Attribute ihres Clienten. Die Client-Threads dienen als reine Empfangsroutinen, welche die ankommenden Nachrichten ihres Clienten verarbeiten und im Scheduling-Betrieb dem globalen Scheduler signalisieren, dass eine neue Nachricht eingetroffen ist. Der Informationsgehalt der Nachricht wird über die Attribute des Clienten-Objekt transportiert. Das heißt, wenn ein Client beispielsweise eine Bandbreite gemakelt hat, wird diese in das Attribut *wanted_bw* eingetragen. Das Senden von Nachrichten geschieht aus einem dritten Kontext, welcher über exportierte Funktionen dargestellt wird.

Fig. 17 zeigt den Aufbau des DIOS-Server Moduls. Gezeigt sind ein DIOS-GS 1701, eine Client-Liste 1702, ein DIOS-SPI 1703, ein Server Thread 1704, Send 1705, mehrere Client Threads CT1, CT2, ..., CTn, ein Netzwerk 1706 und der DIOS-Server 1707.

Die Elemente 1701, 1703, 1704, 1705, 1706, CT1, CT2, ..., CTn stellen Kernel-Threads dar, und die schraffierten Flächen sind statische Funktionen, welche nach Bedarf aufgerufen werden. Zusätzlich ist der Ablauf einer neu eingehenden Verbindung dargestellt.

In Fig. 17 sind die folgenden Schritte gezeigt:

171: Eingehende Verbindung von einem Clienten.

172:    Server-Thread alloziert ein neues Clienten-Objekt und fügt es in die Clienten-Liste ein.

173:    Server-Thread initialisiert einen neuen Client-Thread.

174:    Client-Thread empfängt das Konfigurationspaket und setzt die enthaltenden Attribute.

175:    Client-Thread signalisiert dem DIOS-GS das Eintreffen der Nachricht.

176:    Der DIOS-GS reagiert über die DIOS-SPI ("*Scheduling Pro- grammable Interface*") auf eingehende Nachrichten.

177:    Die DIOS-SPI übersetzt die Befehle in das Protokoll und ruft die Senderoutine auf.

178:    Die Senderoutine verschickt die Nachricht über das Netzwerk.

Bei bereits angemeldeten Clienten fallen die Schritte eins bis drei weg und die Kommunikation besteht aus den Schritten vier bis acht. Im Standalone-Betrieb entfallen die Schritte 175 bis 177. Stattdessen wird der Client direkt über die Senderoutine in den NOOP-Modus versetzt.

Die vorangegangenen Abschnitte haben die Werkzeuge des DIOS-Frameworks vorgestellt, welche notwendig sind, um ein verteiltes Scheduling zu ermöglichen. Das eigentliche Scheduling findet im DIOS-Global Scheduler 124 (vgl. Fig. 12) statt. Zunächst wird nachfolgend die Funktionsweise des DIOS-GS 124 erläutert. Anschließend wird auf Details wie Betriebsmodi und Berechnung der Zeitscheiben bzw. -fenster eingegangen.

Das Scheduling beruht auf einem Zeitscheiben-Verfahren. Innerhalb eines definierbaren Zeitrahmens (standardmäßig eine Sekunde) bekommen alle Clienten, die den Zugriff auf das SAN angemeldet haben eine Zeitscheibe zugewiesen. Innerhalb des Rahmens werden alle neu-eintreffenden Anfragen gesammelt und im nächsten Rahmen berücksichtigt.

Fig. 18 zeigt ein Ablaufdiagramm eines globalen I/O-Schedulers (DIOS-GS 124; globaler I/O-Zugriffscontroller).

Nach der Initialisierung, womit die Registrierung beim Server und die Initialisierung von Datenstrukturen gemeint sind, befindet sich der Scheduler im Wartezustand 1801 (IDLE). Dieser wird erst verlassen, sobald einer der Clienten eine I/O-Anfrage 1811 stellt. Daraufhin wird das so genannte "*rescheduling*" 1802 durchgeführt, welches für alle Clienten, die eine I/O-Anfrage gestellt haben, eine Zeitscheibe berechnet. Anschließend beginnt das Scheduling-Intervall 1803, in welchem jeden Clienten der Reihe nach ihre Zeitscheibe zugewiesen wird. Nach Ablauf des Rahmens wird im Schritt 1804 überprüft, ob mindestens eine I/O-Anfrage während des Scheduling-Intervalls gestellt worden ist. Für den Fall, dass dies nicht geschehen ist kehrt der Scheduler in den Idle-Zustand 1801 zurück, andernfalls wird ein "*rescheduling*" 1802 durchgeführt. Es werden zwei Arten von Betriebsmodi mit jeweils zwei Ausprägungen unterschieden: Einerseits ein client-seitiger und andererseits ein scheduler-seitiger Betriebsmodus, dessen Ausprägung jeweils miteinander kombiniert werden können. Die client-seitigen Ausprägungen sind analog zu den beiden Modi des Scheduling-Betriebs des lokalen I/O-Schedulers: Realtime-Mode und Best-Effort-Mode.

Die Ausprägungen der server-seitigen Betriebsmodi schaffen eine Abstimmung zwischen Performance und Antwortzeit des Systems: Dynamic Cycle - Constant Timeslice (DC-CT) und Constant Cycle - Dynamic Timeslice (CC-DT). Diese Modi können im laufenden Betrieb über das Sys-Filesystem konfiguriert werden. Im Folgenden werden die einzelnen Modi kurz erläutert.

Der Realtime-Modus kommt für diejenigen Clienten zum Einsatz, die eine Mindest-Bandbreite angefordert haben. Die Zeitscheibe ($t_{slice}$) ergibt sich aus der Anbindung des Clienten ($bw_{client}$), die idealerweise mindestens so groß ist wie die verfügbare Bandbreite des SANs $(bw_{san})$, angeforderten Bandbreite ($bw_{applied}$) und Größe des Scheduling-Intervalls $(T_{cycle})$:

$$t_{slice} = \frac{bw_{applied}}{\min(bw_{client}, bw_{san})} \cdot T_{cycle}$$

Die Zeitscheibe eines Realtime-Clienten wird solange reserviert, bis der Client die Bandbreite wieder freigibt oder ein Fehler auftritt. Die Fehlerfälle werden im weiteren Verlauf erläutert.

Jeder Client, der eine I/O-Anfrage stellt und keine Bandbreite gemakelt hat, wird als Best-Effort-Client behandelt. Ein BE-Client bekommt nur eine Zeitscheibe zugeteilt, wenn er einen Request angemeldet hat. Der zur Verfügung stehende Scheduling-Rahmen wird gleichmäßig auf alle BE-Clienten ($b_j$) gemäß ihrer verfügbaren Bandbreite aufgeteilt. Dabei ergibt sich der Best-Effort-Scheduling-Rahmen $(T_{BE\text{-}cycle})$ aus dem definierten Intervall (standardmäßig eine Sekunde) abzüglich der Zeitschlitze der Realtime-Clienten. Der Zeitschlitz eines Clienten ($t_{slice|i}$) berechnet ergibt sich somit zu

$$t_{slice|i} = \sum_{j=1}^{n} \left( \frac{T_{BE-cycle}}{\min(bw_{client|j}, bw_{san})} \right) \cdot bw_{client|i}$$

Die Bedeutung der Variablen $n$ (Anzahl BE-Clienten) wird im nächsten Abschnitt erläutert.

Wie im vorherigen Abschnitt angedeutet, ist die Anzahl der BE-Clienten nicht eindeutig. Es wird unterschieden zwischen aktiven Clienten und angemeldeten Clienten.

Wenn zur Berechnung der Zeitscheiben die Anzahl aller angemeldeten Clienten zugrunde gelegt wird, befindet sich der Scheduler im *Dynamic Cycle - Constant Timeslice* Modus. Wie der Name schon sagt, bleiben die Zeitscheiben konstant, unabhängig davon, wieviele Clienten in diesem Augenblick I/O-Anfragen gestellt haben. Das führt dazu, dass der Scheduling-Rahmen sich dynamisch ändert und das vorgegebene Intervall eine maximale Intervalllänge definiert. Der Vorteil an diesem Modus ist, dass ein Rahmen in der Regel kürzer ist und somit das System schneller auf Veränderungen reagieren kann. Nachteilig wirkt sich aus, dass ein Client eine kürzere Zeit sequentiell arbeiten kann, was sich negativ auf die Performance auswirkt, da mehr Kopfsprünge entstehen.

Ein Modus arbeitet mit einem konstanten Scheduling-Intervall und sich dynamisch ändernden Zeitscheiben. Im schlechtesten Fall muss ein Client zwei Scheduling-Intervalle abzüglich seiner Zeitscheibe warten bis er Zugriff auf das SAN bekommt. Dafür hat der Client im Mittel eine längere Zeit Zugriff auf das SAN. Dieser Modus bietet sich insbesondere für Applikationen an, die keine Echtzeit-Priorität benötigen, wie zum Beispiel Render-Anwendungen.

Aufgrund der Tatsache, dass ein Best-Effort-Client nach Ablauf der Zeitscheibe eine neue Anforderung stellen muss, kann es passieren, dass der Client, der als letztes das Token gehabt hat, nicht rechtzeitig einen neuen Request stellen kann. Da systematische Wartezeiten zu Lasten der Performance gehen, sind solche zu vermeiden. Daher bedient sich der Scheduler eines anderen Mechanismus', um den letzten Clienten in einem Scheduling-Intervall nicht permanent zu benachteiligen. Der letzte Client eines Rahmens wird mit einem Flag versehen. Nach Ablauf der Zeitscheibe wird geprüft, wie viel Prozent der betreffende Client von seiner Zeitscheibe genutzt hat. Für den Fall, dass die Auslastung über einem frei definierbaren Wert (standardmäßig 80 Prozent) liegt oder eine neue Anforderung gestellt worden ist, bekommt der Client im nächsten Umlauf eine Zeitscheibe.

Um die Effizienz des Systems zu erhöhen werden auch die Realtime-Clienten überwacht. Da die Auslastung kein Kriterium darstellt, weil der Idle-Timer im Realtime-Modus inaktiv ist, wird protokolliert, wie oft ein Realtime-Client hintereinander keine neue Anforderung stellt. Sobald eine neue Anforderung gestellt worden ist, wird dieser Zähler zurückgesetzt. Überschreitet der Zähler einen frei wählbaren Wert (standardmäßig zehn), wird dem Clienten die Bandbreite entzogen.

Die Quality of Service (QoS) API (vgl. Bezugszeichen 125 in Fig. 12) des DIOS-Framework bildet die Schnittstelle zum Benutzerraum. Sie stellt Applikationen Funktionen zur Verfügung, über welche eine Applikation eine feste Mindest-Bandbreite anfordern und wieder freigeben kann. Im Folgenden wird kurz auf die Funktionsweise der Schnittstelle eingegangen. Dabei beschränkt sich die Betrachtung auf die asynchrone Variante der Funktion *dios_apply_bw_safe,* welche im Gegensatz zu der synchronen in der Lage ist, der Applikation Statusmeldungen zurückzuliefern, zum Beispiel wenn nach erfolgreicher Anforderung im laufenden Betrieb ein Fehler auftritt und die Bandbreite nicht mehr garantiert werden kann. Dies bedarf jedoch unter anderem einer Callback-Referenz, welche beim Anfordern mit übergeben werden muss.

Die QoS-API kommuniziert über einen Netlink-Socket mit dem DIOS-Client. Sie besteht aus exportierten Funktionen, welche in der sicheren Variante einen Userspace-Thread initialisieren, der auch nach einer erfolgreichen Bandbreiten-Zuweisung den Netlink-Socket überwacht, für den Fall, dass Fehlermeldungen eintreffen.

Fig. 19 zeigt eine schematische Darstellung zur Erläuterung einer Funktionsweise eines DIOS-QoS-API (links). Es sind gezeigt eine Anwendung 1901, ein DIOS-QoS-API 1902, ein API-Thread 1903, ein DIOS-Client 1904 und ein TCP 1905.

Es sind die folgenden Schritte gezeigt:

191: Applikation ruft die API-Funktion auf und übergibt ihr neben der Bandbreite eine Callback-Referenz.
192: Die Funktion generiert eine Nachricht und verschickt diese über einen Netlink-Socket.
193: Ein Thread wird initialisiert, der auf eintreffende Nachrichten vom Netlink-Socket wartet.
194: Der Applikation wird die Thread-ID des API-Threads zurückgegeben.
195: Der DIOS-Client verschickt die Anforderung an den DIOS- Server.
196: Die Antwort wird empfangen und ausgewertet.
197: Der Client verschickt die Rückmeldung über den Netlink- Socket.
198: Der API-Thread empfängt die Nachricht und liefert ein Callback zur Applikation zurück.

Der rechte Teil der Fig. 19 zeigt das Freigeben von Bandbreite. Die Funktionsweise entspricht der des Makelns. Anzumerken ist, dass die Applikation bei dem API-Aufruf die Thread-ID des API-Threads übergeben muss, so dass der API-Thread beendet werden kann. Der fett gedruckte Pfad 191b, 192b, 193b zeigt den Vorteil der asynchronen Variante, weil es nur hier möglich ist, im Fehlerfall der Applikation eine Rückmeldung zu geben.

Das vorangehend als Ausführungsbeispiel beschriebene Framework wurde für eine Verarbeitungskette der digitalen Videobearbeitung genutzt. Eine der eingesetzten Applikationen wird in der Filmindustrie produktiv eingesetzt. Dieser Test zeigt, dass das DIOS-Framework auch für den praktischen Gebrauch tauglich ist. Ferner wird der Nutzen des Frameworks unter praxisnahen Bedingungen aufgezeigt werden.

Die Verarbeitung von Videosequenzen in der professionellen Filmindustrie besteht aus einer Vielzahl an Schritten. Am Anfang steht die Akquirierung des Materials, die konzeptionell aus drei Einzelschritten besteht. Ein Großteil des Filmmaterials, das während einer Produktion entsteht durchläuft diese Schritte, unabhängig davon, ob es in der endgültigen Version Verwendung findet oder nicht. Diese Arbeitsschritte werden somit am häufigsten durchlaufen und in der Branche als "*Dailies Workflow*" bezeichnet.

Fig. 20 zeigt ein Blockschaltbild für einen Workflow.

Zunächst wird das Material von einer Filmrolle gescannt und im Schritt 211 über eine Workstation auf das Speichermedium geschrieben ("*Ingest*" 201). Dieser klassische Prozess wird zur Zeit ergänzt durch das Einspielen von digital akquiriertem Material von den ersten verfügbaren film-tauglichen Kameras, zum Beispiel Thomson Viper. Hierbei würde dann der Inhalt eines Feldrecorders auf das Speichersystem kopiert.

Anschließend wird von einem zweiten Arbeitsplatz aus das eingelesene Material verifiziert und standardisierten Prozessschritten unterzogen ("*Verify/Processing*" 202). Die Workstation liest im Schritt 212 somit einen Videostrom und schreibt im Schritt 222 die bearbeitete Sequenz in einen anderen Bereich des Speichersystems. Die notwendigen Bearbeitungsschritte können heutzutage mit modernen Rechnerarchitekturen prinzipiell in Echtzeit erledigt werden, sodass der gesamte Schritt im Idealfall in Echtzeit vollzogen wird. In der Praxis wird jedoch ein menschlicher Bearbeiter diesen Schritt nur abschnittsweise in Echtzeit ausführen.

Abschließend wird das Material noch einmal begutachtet und zum Beispiel auf einem HD Videorecorder aufgezeichnet 213. Das Einlesen und Ausspielen 203 des Materials unterliegt zwingend Echtzeitanforderungen. Der Processing-Schritt sollte aus Effizienzgründen in Echtzeit machbar sein. Insgesamt werden somit zwei lesende- und zwei schreibende Videoströme möglichst gleichzeitig benötigt.

Im folgenden Abschnitt wird der Aufbau des in Fig. 20 dargelegten Workflows mit den verfügbaren Mitteln beschrieben. Es wird auf die Hardware-Komponenten eingegangen, sowie die für jeden Verarbeitungsschritt verwendete Software vorgestellt. Abschließend wird die Konfiguration erläutert. Dazu zählen sowie die Parameter der Aufzeichnung, als auch Einstellungen des DIOS-Frameworks.

Fig. 21 zeigt eine Darstellung eines Testaufbaus für den Workflow in Fig. 20.

Die wesentlichen Hardware-Komponenten für die praxisnahe Simulation eines Dailies Workflows bestehen aus (vgl. Fig. 21): drei Workstations 211, 212, 213, vier Displays 214, ..., 217, drei Speichersysteme 218, 219, 2110, Fibre Channel SAN-Umgebung und einer digitalen Filmkamera 2111.

Der "*Ingest*" wird direkt mittels der digitalen Filmkamera 2111 (Viper von Thomson Grass Valley) realisiert. Die Viper ist eine professionelle Filmkamera, die eine native Auflösung von 1920 x 1080 Bildpunkten liefert (Full-HD). Die digitalen Filmkamera 2111 zeichnet mit einer Bildrate von bis zu 30 Bildern pro Sekunde mit einer Farbtiefe von 10 Bit auf. Die drei Workstations 211, 212, 213 (für "*Ingest*" 224, "*Processing*" 226, "*Playout*" 227) und die Fibre-Channel SAN-Umgebung entsprechen denen, die auch bei den vorangegangenen Tests zum Einsatz gekommen sind. Die Desktops der Workstations 211, 212, 213 werden über einen KVM-Switch auf einen Monitor abgebildet, um den Arbeitsablauf an drei Arbeitsplätzen durch einen Bediener vorführen zu können. Die drei weiteren Displays dienen der Ausgabe des HD-SDI Signals, das über eine Video-IO Karte zu Kontrollzwecken ausgegeben wird. Hinzu kommt ein weiterer Linux PC, der als Metadatenserver für das StorNext Dateisystem und als DIOS-Server fungiert.

Für die Videoverarbeitung kommen zwei Applikationen zum Einsatz. Der "*Ingest*" und die Wiedergabe wird über das Postproduktions-Framework "*Bones*" realisiert. Das Programmpaket befindet sich im professionellen Umfeld der Postproduktion im Einsatz und unterstreicht somit die Praxisnähe dieses Testaufbaus. Das Bones Framework besitzt die Eigenschaft, dass sobald ein Buffer "*Underflow*" oder "*Overflow*" auftritt, die Aufnahme beziehungsweise Wiedergabe gestoppt wird. So wird der Anwender sofort auf das Problem aufmerksam gemacht und der Vorgang müsste wiederholt werden. Der "*Processing*"-Schritt wird über ein Kommandozeilen basiertes Programm durchgeführt. Das Programm *dpxconv* ist im Rahmen der Forschungsarbeiten bei Thomson Corporate Research entwickelt worden und dient der Entwicklung von GPU-basierten Echtzeitbildbearbeitungsalgorithmen, wie zum Beispiel örtlichen Transformationen oder Farbkorrekturen. Die Echzeit-Performance und die Tatsache, dass das Programm über die Kommandozeile bedienbar ist, haben den Ausschlag für die Wahl des Programms gegeben. Dies führt zu einer Erleichterung bei der Durchführung des Experiments.

Das Filmmaterial wird in voller HD-Auflösung (1920 x 1080) mit einer Farbtiefe von 10 Bit (RGB) aufgenommen. Die Bildrate beträgt 30 Bilder pro Sekunde, sodass ein Videostrom eine Bandbreite von knapp 250 MB/s benötigt. Dies entspricht einer aggregierten Datenrate von einem Gigabyte pro Sekunde, die den drei Clienten zur Verfügung stehen muss. Die Bandbreiten sind über die DIOS-QoS-API gemakelt worden. Dies ist notwendig, da einer der Clienten die doppelte Bandbreite für zwei Videoströme benötigt. Das DIOS-Framework arbeitet demnach im Realtime-Modus mit einem Scheduling Intervall von einer Sekunde. Die Applikationen sind so konfiguriert, dass intern mit 50 Framebuffern pro Videostrom gearbeitet wird. Dadurch werden Schwankungen der momentanen Datenrate kompensiert.

Das Experiment ist mehrere Male wiederholt worden. Dabei dient die aufgenommene Sequenz gleichzeitig zur Dokumentation. Das Live-Bild von der Kamera wird auf einem der drei HD-SDI Displays dargestellt. Der mittlere Monitor zeigt den Desktop 225 für die drei Workstations. Die Image-Processing-Anwendung wird mit einem zeitlichen Versatz von knapp 40 Sekunden gestartet. Dies dient dazu, um sicher zu gehen, dass die gelesenen Bilder nicht noch im Cache des RAID-Controllers vorhanden sind. So wird gewährleistet, dass jeder Prozess tatsächlich von den Festplatten des Speichersystem liest. Das bearbeitete Material wird während der Bearbeitung gleichzeitig noch auf einen Kontroll-Monitor angezeigt (oben rechts). Mit einem weiteren zeitlichen Versatz wird auf der dritten Workstation eine Bones-Instanz gestartet, die das verarbeitete Material abspielt und auf dem rechten Display wieder ausgibt. Während des gesamten Vorgangs ist das Scheduling anhand der Leuchtdioden des Fibre Channel Switches nachzuverfolgen. Deutlich erkennbar sind die unterschiedlich langen Zeitscheiben und der Scheduling Zyklus. Die Leuchtdioden der Speichersysteme signalisieren, dass tatsächlich auf die Festplatten zugegriffen wird.

Es ist bei allen Versuchen zu keiner Unterbrechung der Videoströme gekommen. Einer dieser Testläufe ist mittels eines Films dokumentiert worden. Das Bones-Framework hat keine Fehler registriert und das verarbeitete Material beinhaltet alle Bilder des Originalmaterials. Weitere Experimente mit beispielsweise vier Workstations, die über Bones verschiedene Filmsequenzen wiedergeben, haben die Ergebnisse bestätigt. Abschließend ist die SAN-Umgebung so umkonfiguriert worden, dass jeder Client statt über sechs Fibre Channel Ports über drei auf das Speichersystem zugreift. Dadurch wird die Bandbreite des Speichersystems durch die Fibre Channel Anbindung auf 1200 MB/s begrenzt. In dieser Konfiguration ist es ebenfalls möglich gewesen, vier parallele Videoströme abzuspielen. Das Videomaterial ist in HD-Auflösung mit 30 Frames pro Sekunde wiedergeben worden, was von der Datenrate ungefähr fünf Videostreams mit 25 Bildern pro Sekunde entspricht. Die Ergebnisse zeigen, dass mithilfe des DIOS-Frameworks nahezu die theoretische Leistungsfähigkeit des Speichersystems ausgenutzt werden kann.

Am Beispiel des in Fig. 20 vorgestellten Workflows, der in der Praxis relevant ist, kann mittels des DIOS-Frameworks mit dem gleichen Equipment die Verarbeitungskette parallelisiert werden. Im Vergleich mit den herkömmlichen Mitteln, müssten bei gleicher Ausstattung die drei Verarbeitungsschritte sequentiell durchgeführt werden. Daher ergibt sich durch das DIOS-Framework eine mögliche Verringerung des Verarbeitungszeit um den Faktor drei.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zur Zugriffssteuerung mehrerer Applikationen, die jeweils als ein Applikations-Client (120) in einer Betriebssystemumgebung einer Datenverarbeitungseinrichtung implementiert sind, auf ein gemeinsames Speichersystem, welches in der Betriebssystemumgebung in Form mehrerer Speicherblöcke (126a, 126b, ...)abgebildet wird, die jeweils einem der Applikations-Clienten (120) zugeordnet sind, wobei bei dem Verfahren:

   - jedem Speicherblock ein lokaler I/O-Zugriffscontroller (121) zugeordnet wird, welcher konfiguriert ist, einen Zugriff des zugeordneten Applikations-Clients (120) auf den Speicherblock zu blockieren oder zuzulassen,
   - lokale I/O-Zugriffscontroller (121), die jeweils einem gleichen Applikations-Client (120) zugeordnet sind, einem lokalen Clienten zur Ablaufsteuerung (122) zugeordnet werden, welcher konfiguriert ist, die dem gleichen Applikations-Client (120) zugeordneten, lokalen I/O-Zugriffscontroller (121) gemeinsam in einen Zustand "Zugriff erlaubt" oder einen Zustand "Zugriff blockiert" zu versetzen,
   - in der Betriebssystemumgebung ein globaler I/O-Zugriffscontroller (124) gebildet wird, welcher konfiguriert ist, an die lokalen Clienten zur Ablaufsteuerung (122) Steuerinformationen zu übermitteln, und
   - ein I/O-Zugriff der Applikations-Clienten (120) auf einen oder mehrere der Speicherblöcke des gemeinsamen Speichersystems einem zeitlichen Ablaufmuster entsprechend global geregelt wird, indem die lokalen Clienten zur Ablaufsteuerung (122) die dem gleichen Applikations-Client (120) zugeordneten lokalen I/O-Zugriffscontroller (121) gemeinsam in den Zustand "Zugriff erlaubt" oder den Zustand "Zugriff blockiert" versetzen entsprechend der Steuerinformationen, die durch die lokalen Clienten zur Ablaufsteuerung (122) von dem globalen I/O-Zugriffscontroller (124) empfangen wird.

2. Verfahren nach Anspruch 1, **dadurch gekennzeichnet, dass** mit der Steuerinformation im Rahmen des zeitlichen Ablaufmusters den lokalen Clienten zur Ablaufsteuerung (122) jeweils wenigstens ein zeitliches Zugriffsfenster zugewiesen wird, in welchem die dem gleichen Applikations-Client (120) zugeordneten lokalen I/O-Zugriffscontroller (121), die ansonsten im Zustand "Zugriff blockiert" sind, dann gemeinsam in den Zustand "Zugriff erlaubt" versetzt werden.

3.  Verfahren nach Anspruch 2, **dadurch gekennzeichnet, dass** mit der Steuerinformation im Rahmen des zeitlichen Ablaufmusters den lokalen Clienten zur Ablaufsteuerung (122) jeweils zeitliche Zugriffsfenster gleicher Länge zugewiesen werden.

4.  Verfahren nach Anspruch 2 oder 3, **dadurch gekennzeichnet, dass** mit der Steuerinformation im Rahmen des zeitlichen Ablaufmusters den lokalen Clienten zur Ablaufsteuerung (122) zeitliche Zugriffsfenster entsprechend einem jeweils angeforderten Anteil an einer Gesamtzugriffsbreite zugewiesen werden.

5.  Verfahren nach mindestens einem der Ansprüche 2 bis 4, **dadurch gekennzeichnet, dass** mit der Steuerinformation im Rahmen des zeitlichen Ablaufmusters den lokalen Clienten zur Ablaufsteuerung (122) zeitliche Zugriffsfenster entsprechend zuvor zwischen den Applikations-Clienten verhandelter Service-Qualitäts-Anforderungen zugewiesen werden.

6.  Verfahren nach mindestens einem der Ansprüche 2 bis 5, **dadurch gekennzeichnet, dass** das den lokalen Clienten zur Ablaufsteuerung (122) jeweils zugewiesene zeitliche Zugriffsfenster abgebrochen wird, wenn eine Inaktivität des zughörigen Applikations-Clienten (120) festgestellt wird.

7.  Verfahren nach mindestens einem der vorangehenden Ansprüche, **dadurch gekennzeichnet, dass** die lokalen I/O-Zugriffscontroller (121) jeweils als zur Laufzeit ladbares Modul gebildet werden.

8.  Verfahren nach mindestens einem der vorangehenden Ansprüche, **dadurch gekennzeichnet, dass** jedem lokalen Clienten zur Ablaufsteuerung (122) lokale I/O-Zugriffscontroller (121) zugeordnet werden, die nicht nur dem gleichen Applikations-Clienten (120) sondern auch noch Speicherlöcken in einem einzelnen Dateisystems zugeordnet sind.

9.  Verfahren nach mindestens einem der vorangehenden Ansprüche, **dadurch gekennzeichnet, dass** in der Betriebssystemumgebung ein weiterer globaler I/O-Zugriffscontroller gebildet wird, welcher der Arbeitsweise des globalen I/O-Zugriffscontrollers (124) entsprechend arbeitet und den Zugriff auf ein weiteres gemeinsames Speichersystem, das wahlweise dem gemeinsamen Speichersystem entsprechend in der Datenverarbeitungseinrichtung implementiert ist, global regelt.

10. Vorrichtung zur Zugriffssteuerung mehrerer Applikationen, die jeweils als ein Applikations-Client (120) in einer Betriebssystemumgebung einer Datenverarbeitungseinrichtung implementiert sind, auf ein gemeinsames Speichersystem, welches in der Betriebssystemumgebung in Form mehrerer Speicherblöcke (126a, 126b, ...) abgebildet ist, die jeweils einem der Applikations-Clienten zugeordnet sind, wobei bei der Vorrichtung:

    - lokale I/O-Zugriffscontroller (121) gebildet sind, die jeweils einem Speicherblock zugeordnet ist, wobei die lokalen I/O-Zugriffscontroller (121) konfiguriert sind, einen Zugriff des zugeordneten Applikations-Clients (120) auf den Speicherblock zu blockieren oder zuzulassen,
    - lokale Clienten zur Ablaufsteuerung (122) gebildet sind, denen jeweils lokale I/O-Zugriffscontroller (121) eines gleichen Applikations-Clienten (120) zugeordnet sind, wobei die lokalen Clienten zur Ablaufsteuerung (122) konfiguriert sind, die dem gleichen Applikations-Client (120) zugeordneten, lokalen I/O-Zugriffscontroller (122) gemeinsam in einen Zustand "Zugriff erlaubt" oder einen Zustand "Zugriff blockiert" zu versetzen,
    - in der Betriebssystemumgebung ein globaler I/O-Zugriffscontroller (124) gebildet ist, welcher konfiguriert ist, an die lokalen Clienten zur Ablaufsteuerung (122) Steuerinformationen zu übermitteln, und
    - ein I/O-Zugriff der Applikations-Clienten (120) auf einen oder mehrere der dem Applikations-Clienten (120) jeweils zugeordneten Speicherblöcke des gemeinsamen Speichersystems einem zeitlichen Ablaufmuster entsprechend global geregelt ist, indem die lokalen Clienten zur Ablaufsteuerung (122) die dem gleichen Applikations-Client (120) zugeordneten lokalen I/O-Zugriffscontroller (121) gemeinsam in den Zustand "Zugriff erlaubt" oder den Zustand "Zugriff blockiert" versetzen entsprechend der Steuerinformationen, die durch die lokalen Clienten zur Ablaufsteuerung (122) von dem globalen I/O-Zugriffscontroller (124) empfangen wird.

**Claims**

1. A method for controlling the access by a plurality of applications, which are respectively implemented as an application client (120) in an operating system environment of a data processing device, to a shared storage system which is mapped in the operating system environment in the form of a plurality of storage blocks (126a, 126b, ...) which are respectively associated with one of the application clients (120), wherein the method involves:

   - each storage block being assigned a local I/O access controller (121) which is configured to block or allow access by the associated application client (120) to the storage block,
   - local I/O access controllers (121) which are respectively associated with the same application client (120) being assigned to a local client for flow control (122) which is configured to put the local I/O access controllers (121) which are associated with the same application client (120) into an "access permitted" state or an "access blocked" state together,
   - the operating system environment having a global I/O access controller (124) formed in it which is configured to transmit control information to the local clients for flow control (122), and
   - an I/O access operation by the application clients (120) to one or more of the storage blocks in the shared storage system being regulated globally in line with a temporal flow pattern by virtue of the local clients for flow control (122) putting the local I/O access controllers (121) which are associated with the same application client (120) into the "access permitted" state or the "access blocked" state together in line with the control information which is received by the local clients for flow control (122) from the global I/O access controller (124).

2. The method as claimed in claim 1, **characterized in that** the control information is used within the context of the temporal flow pattern to assign the local clients for flow control (122) at least one respective temporal access window in which the local I/O access controllers (121) which are associated with the same application client (120), and which are otherwise in the "access blocked" state, are then put into the "access permitted" state together.

3. The method as claimed in claim 2, **characterized in that** the control information is used within the context of the temporal flow pattern to assign the local clients for flow control (122) respective temporal access windows of the same length.

4. The method as claimed in claim 2 or 3, **characterized in that** the control information is used within the context of the temporal flow pattern to assign the local clients for flow control (122) temporal access windows in line with a respective requested proportion of a total access width.

5. The method as claimed in at least one of claims 2 to 4, **characterized in that** the control information is used within the context of the temporal flow pattern to assign the local clients for flow control (122) temporal access windows in line with service quality requests previously negotiated between the application clients.

6. The method as claimed in at least one of claims 2 to 5, **characterized in that** the temporal access window respectively associated with the local clients for flow control (122) is terminated if inactivity in the associated application client (120) is detected.

7. The method as claimed in at least one of the preceding claims, **characterized in that** the local I/O access controllers (121) are respectively formed as a module which can be loaded at runtime.

8. The method as claimed in at least one of the preceding claims, **characterized in that** each local client for flow control (122) is assigned local I/O access controllers (121) which are associated not only with the same application client (120) but also with storage blocks in a single file system.

9. The method as claimed in at least one of the preceding claims, **characterized in that** the operating system environment has a further global I/O access controller formed in it which operates in line with the manner of operation of the global I/O access controller (124) and globally regulates the access to a further shared storage system which is optionally implemented in the data processing device in line with the shared storage system.

10. An apparatus for controlling the access by a plurality of applications, which are respectively implemented as an application client (120) in an operating system environment for a data processing device, to a shared storage system which is mapped in the operating system environment in the form of a plurality of storage blocks (126a, 126b, ...) which are respectively associated with one of the application clients, wherein the apparatus has:

- local I/O access controllers (121) formed which are respectively associated with a storage block, wherein the local I/O access controllers (121) are configured to block or allow access by the associated application client (120) to the storage block,
- local clients for flow control (122) formed which respectively have associated local I/O access controllers (121) for the same application client (120), wherein the local clients for flow control (122) are configured to put the local I/O access controllers (122) which are associated with the same application client (120) into an "access permitted" state or an "access blocked" state together,
- a global I/O access controller (124) formed in the operating system environment, said global I/O access controller being configured to transmit control information to the local clients for flow control (122), and
- an I/O access operation by the application clients (120) to one or more storage blocks, which are respectively associated with the application clients (120), in the shared storage system regulated globally in line with a temporal flow pattern by virtue of the local clients for flow control (122) putting the local I/O access controllers (121) which are associated with the same application client (120) into the "access permitted" state or the "access blocked" state together in line with the control information which is received by the local clients for flow control (122) from the global I/O access controller (124).

**Revendications**

1. Procédé pour commander l'accès de plusieurs applications, qui sont chacune implémentées en tant que client d'application (120) dans un environnement de système d'exploitation d'un dispositif de traitement de données, à un système commun de stockage qui est reproduit dans l'environnement de système d'exploitation sous la forme de plusieurs blocs de stockage (126a, 126b, ...) qui sont chacun attribués à un des clients d'application (120), où dans le procédé :

   - à chaque bloc de stockage est attribué un contrôle d'accès E/S local (121), lequel est configuré pour bloquer ou autoriser un accès du client d'application (120) attribué au bloc de stockage,
   - des contrôleurs d'accès E/S locaux (121), lesquels sont chacun attribués à un client d'application (120) identique, sont attribués à un client local destiné à une commande de processus (122), lequel client local est configuré pour attribuer un état « Accès autorisé » ou un état « Accès bloqué » au contrôleur d'accès E/S local (121) attribué au client d'application (120) identique,
   - dans l'environnement de système d'exploitation, un contrôleur d'accès E/S global (124) est conçu, lequel est configuré pour transmettre des informations de commande aux clients locaux destinés à une commande de processus (122), et
   - un accès E/S des clients d'application (120) à un ou plusieurs des blocs de stockage du système commun de stockage est réglé de façon globale selon un ensemble de séquences temporel, par une attribution, par les clients locaux destinés à une commande de processus (122), aux contrôleurs d'accès E/S locaux (121) attribués au client d'application (120) identique, de l'état « Accès autorisé » ou de l'état « Accès bloqué » selon les informations de commande, lesquelles sont reçues via les clients locaux destinés à une commande de processus (122) par les contrôleurs d'accès E/S globaux (124).

2. Procédé selon la revendication 1, **caractérisé en ce qu'**avec l'information de commande dans le cadre de l'ensemble de séquences temporel, les clients locaux destinés à une commande de processus (122) se voient chacun attribuer au moins une fenêtre d'accès temporelle, dans laquelle les contrôleurs d'accès E/S locaux (121) attribués au client d'application (120) identique, qui se trouvent à l'état « Accès bloqué », passent alors à l'état « Accès autorisé ».

3. Procédé selon la revendication 2, **caractérisé en ce qu'**avec l'information de commande dans le cadre de l'ensemble de séquences temporel, les clients locaux destinés à une commande de processus (122) se voient chacun attribuer des fenêtres d'accès temporelles de même longueur.

4. Procédé selon la revendication 2 ou 3, **caractérisé en ce qu'**avec l'information de commande dans le cadre de l'ensemble de séquences temporel, les clients locaux destinés à une commande de processus (122) se voient attribuer des fenêtres d'accès temporelles correspondant à une partie demandée selon une largeur d'accès globale.

5. Procédé selon au moins une des revendications 2 à 4, **caractérisé en ce qu'**avec l'information de commande dans le cadre de l'ensemble de séquences temporel, les clients locaux destinés à une commande de processus (122) se voient attribuer des fenêtres d'accès temporelles correspondant à ce qui a été expliqué précédemment entre les clients d'application des exigences de qualité de service négociées.

EP 2 137 626 B1

**6.** Procédé selon au moins une des revendications 2 à 5, 5 **caractérisé en ce que** la fenêtre d'accès temporelle attribuée aux clients locaux destinés à une commande de processus (122) est interrompue, lorsqu'une inactivité du client d'application associé (120) est constatée.

**7.** Procédé selon au moins une des revendications précédentes, **caractérisé en ce que** les contrôleurs d'accès E/S locaux (121) sont chacun conçus sous forme de module chargeable sur la durée.

**8.** Procédé selon au moins une des revendications précédentes, **caractérisé en ce que** des contrôleurs d'accès E/S locaux (121) sont attribués à chaque client local destiné à une commande de processus (122), lesquels contrôleurs ne sont pas attribués uniquement au client d'application (120) identique, mais également à des blocs de stockage supplémentaires dans un système de fichiers unique.

**9.** Procédé selon au moins une des revendications précédentes, **caractérisé en ce que**, dans l'environnement de système d'exploitation, un contrôleur d'accès E/S global supplémentaire est conçu, lequel fonctionne selon le mode de fonctionnement du contrôleur d'accès E/S global (124) et règle de façon globale l'accès à un système commun de stockage supplémentaire, lequel est identique au système de stockage global et est implémenté dans le dispositif de traitement de données.

**10.** Dispositif pour commander l'accès de plusieurs applications, qui sont chacune implémentées en tant que client d'application (120) dans un environnement de système d'exploitation d'un dispositif de traitement de données, à un système commun de stockage qui est reproduit dans l'environnement de système d'exploitation sous la forme de plusieurs blocs de stockage (126a, 126b, ...) qui sont chacun attribués à un des clients d'application (120), où dans le dispositif :

- des contrôleurs d'accès E/S locaux (121) sont conçus, lesquels sont chacun attribués à un bloc de stockage, où les contrôleurs d'accès E/S locaux (121) sont configurés pour bloquer ou autoriser un accès du client d'application attribué (120) au bloc de stockage,
- des clients locaux destinés à une commande de processus (122) sont conçus, dont les contrôleurs d'accès E/S locaux (121) sont chacun attribués à un client d'application (120) identique, où les clients locaux destinés à une commande de processus (122) sont configurés pour attribuer un état « Accès autorisé » ou un état « Accès bloqué » au contrôleur d'accès E/S local (122) attribué au client d'application (120) identique,
- dans l'environnement de système d'exploitation, un contrôleur d'accès E/S global (124) est conçu, lequel est configuré pour transmettre des informations de commande aux clients locaux destinés à une commande de processus (122), et
- un accès E/S des clients d'application (120) à un ou plusieurs des blocs de stockage attribués au client d'application (120) du système commun de stockage est réglé de façon globale selon un ensemble de séquences temporel, par une attribution, par les clients locaux destinés à une commande de processus (122), aux contrôleurs d'accès E/S locaux (121) attribués au client d'application (120) identique, de l'état « Accès autorisé » ou de l'état « Accès bloqué » selon les informations de commande, lesquelles sont reçues via les clients locaux destinés à une commande de processus (122) par les contrôleurs d'accès E/S globaux (124).

23

**Fig. 1**

**Fig. 2**

Fig. 3

Fig. 4

**Fig. 5**

**Fig. 6**

**Fig. 7**

**Fig. 8**

| 905 | 904 | 903 |
|---|---|---|

| 906 |
|---|

| 907 |
|---|

| 908 |
|---|

901

| 902 |
|---|

| 910 |
|---|

| 909 |
|---|

**Fig. 9**

1001

| 1005 |
|---|
| 1006 |

1003

1002

| 1004 |
|---|

| 1007a | | 1007b | | 1007n |
|---|---|---|---|---|

**Fig. 10**

**Fig. 11**

EP 2 137 626 B1

**Fig. 12**

**Fig. 13**

Fig. 14

Fig. 15

1610

1601

1602

N          1603          Y

1604

**Fig. 16**

1701

176          1702

1703

1707          172          177

175          173

1704          1705

CTn          CT2          CT1          171

174          178

1706

**Fig. 17**

**Fig. 18**

**Fig. 19**

**Fig. 20**

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7185174 B

**In der Beschreibung aufgeführte Nicht-Patentliteratur**

- **J. Quade et al.** Kerntechnik Folge 19. *Linux Magazin,* 2005, vol. 03, 88-92

- **R. Love.** Linux Kernel Development. Novell Press, 2005
- **J. Corbet et al.** Linux Device Drivers. 2005